# EUROPEAN PATENT SPECIFICATION

(11) **EP 4 401 017 B1**
(45) Date of publication and mention of the grant of the patent: **23.09.2026**
(21) Application number: 21961379.1
(22) Date of filing: 20.10.2021
(51) Int. Cl.: G06Q 10/04

(54) **TRAINING DEVICE, PREDICTION DEVICE, PREDICTION SYSTEM, TRAINING METHOD, PREDICTION METHOD, AND PREDICTION PROGRAM**
TRAININGSVORRICHTUNG, VORHERSAGEVORRICHTUNG, VORHERSAGESYSTEM, TRAININGSVERFAHREN, VORHERSAGEVERFAHREN UND VORHERSAGEPROGRAMM
DISPOSITIF D'ENTRAÎNEMENT, DISPOSITIF DE PRÉDICTION, SYSTÈME DE PRÉDICTION, PROCÉDÉ D'ENTRAÎNEMENT, PROCÉDÉ DE PRÉDICTION ET PROGRAMME DE PRÉDICTION

(43) Date of publication of application: 17.07.2024
(73) Proprietor: MITSUBISHI ELECTRIC CORPORATION, Chiyoda-ku Tokyo 100-8310 (JP)
(72) Inventor: LIU Jikang, Tokyo 100-8310 (JP)
(74) Representative: Pfenning, Meinig & Partner mbB
(86) International application number: PCT/JP2021/038771
(87) International publication number: WO 2023/067726

(56) References cited:
- WO-A1-2019/049688
- WO-A1-2021/130926
- WO-A1-2021/130926
- WO-A1-2021/193864
- JP-A- 2019 091 214
- US-A1- 2011 119 109
- HOTTA, MIYAKO: "IS3-09 Suggested congestion degree estimation procedure based on small amount of training data", THE 20TH SYMPOSIUM ON SENSING VIA IMAGE INFORMATION (SSII20014); JUNE 11-13, 2014, vol. 20, 13 June 2014 (2014-06-13) - 13 June 2014 (2014-06-13), pages IS3 - IS3-09-6, XP009547686, ISBN: 978-4-9906491-2-8
- 角田 啓介. 施設管理支援に向けた常時型人流予測. 情報処理学会研究報告. 20 January 2020. (TSUNODA, Keisuke. Continuous Prediction of People Flow for Supporting Facility Management. IPSJ SIG Technical Report)

## Description

### TECHNICAL FIELD

The present disclosure relates to a learning device, a prediction device, a prediction system, a learning method, a prediction method and a prediction program.

### BACKGROUND ART

There has been known a method of making a prediction by using a learned model. For example, Patent Reference 1 proposes a learning method for a model that makes a prediction.
JP2019091214A discloses an information processing device including: an operation number information acquisition part for acquiring operation number information of a plurality of devices; a waiting person number information acquisition part for acquiring information about the waiting person number of each of the plurality of devices; a calculation part for calculating proper operation number information of the devices on the basis of a value obtained by dividing the total number of the waiting person numbers in a unit period by an allowable value of the waiting person numbers; and a display control part for controlling the display of the operation number information, the proper operation number information, and information about the device number of each waiting person number.

### PRIOR ART REFERENCE

### PATENT REFERENCE

Patent Reference 1: Japanese Patent Application Publication No. 2019-125048

### SUMMARY OF THE INVENTION

### PROBLEM TO BE SOLVED BY THE INVENTION

Incidentally, learning data is necessary for generating a learned model. When it is desired to generate a learned model for making a prediction in normal times, data in normal times are prepared as the learning data. By using the learning data, the learned model for making the prediction in normal times is generated.

There is a case where a prediction needs to be made even in a time of emergency. In such the case, data in emergency times are also prepared as the learning data. When a large amount of data in emergency times have been prepared, prediction accuracy in normal times with the generated learned model is low. On the other hand, when a small amount of data in emergency times have been prepared, the prediction accuracy in emergency times with the generated learned model is low. As above, how to make high-accuracy predictions in normal times and in emergency times is an important issue.

An object of the present disclosure is to make it possible to make high-accuracy predictions in normal times and in emergency times.

### MEANS FOR SOLVING THE PROBLEM

The invention is defined in the appended set of claims. A learning device according to an aspect of the present disclosure is provided. The learning device includes an acquisition unit that acquires first learning data as information indicating at least one of weather at a first spot at a plurality of times and congestion information as information regarding congestion, a normal prediction learned model that outputs a number of people in normal times at the first spot at a certain time when first information indicating at least one of the congestion information and the weather at the first spot at the certain time is inputted thereto, and true value information including true values indicating the numbers of people in normal times at the first spot at a plurality of times and true values indicating the numbers of people in emergency times at the first spot at a plurality of times, a learning generation unit that generates an emergency prediction learned model that outputs the number of people in emergency times at the first spot at the certain time when the first information is inputted thereto by using the first learning data, the normal prediction learned model and the true value information, and an output unit that outputs the normal prediction learned model and the emergency prediction learned model.

### EFFECT OF THE INVENTION

According to the present disclosure, high-accuracy predictions in normal times and in emergency times can be made.

### BRIEF DESCRIPTION OF THE DRAWINGS

Fig. 1 is a diagram showing hardware included in a learning device in a first embodiment.
Fig. 2 is a block diagram showing functions of the learning device in the first embodiment.
Fig. 3 is a diagram (No. 1) for explaining a generation of an emergency prediction learned model in the first embodiment.
Fig. 4 is a diagram (No. 1) showing an example of a new learning data generation method in the first embodiment.
Fig. 5 is a diagram (No. 2) showing the example of the new learning data generation method in the first embodiment.
Fig. 6 is a diagram for explaining relearning in the first embodiment.
Fig. 7 is a diagram (No. 2) for explaining the generation of the emergency prediction learned model in the first embodiment.
Fig. 8 is a diagram showing a prediction system in the first embodiment.
Fig. 9 is a block diagram showing functions of a prediction device in the first embodiment.
Fig. 10 is a block diagram showing functions of a prediction device in a second embodiment.
Fig. 11 is a diagram showing a concrete example of the second embodiment.

### MODE FOR CARRYING OUT THE INVENTION

Embodiments will be described below with reference to the drawings. The following embodiments are just examples and a variety of modifications are possible within the scope of the present disclosure.

### First Embodiment

### <Learning Phase>

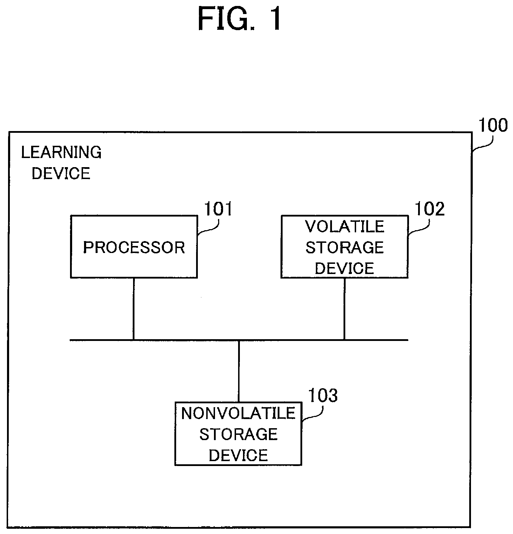

Fig. 1 is a diagram showing hardware included in a learning device in a first embodiment. The learning device 100 executes a learning method. The learning device 100 includes a processor 101, a volatile storage device 102 and a nonvolatile storage device 103.

The processor 101 controls the whole of the learning device 100. The processor 101 is a Central Processing Unit (CPU), a Field Programmable Gate Array (FPGA) or the like, for example. The processor 101 can also be a multiprocessor. Further, the learning device 100 may include a processing circuitry.

The volatile storage device 102 is main storage of the learning device 100. The volatile storage device 102 is a RAM (Random Access Memory), for example. The nonvolatile storage device 103 is auxiliary storage of the learning device 100. The nonvolatile storage device 103 is an HDD (Hard Disk Drive) or an SSD (Solid State Drive), for example.

Next, functions of the learning device 100 will be described below.

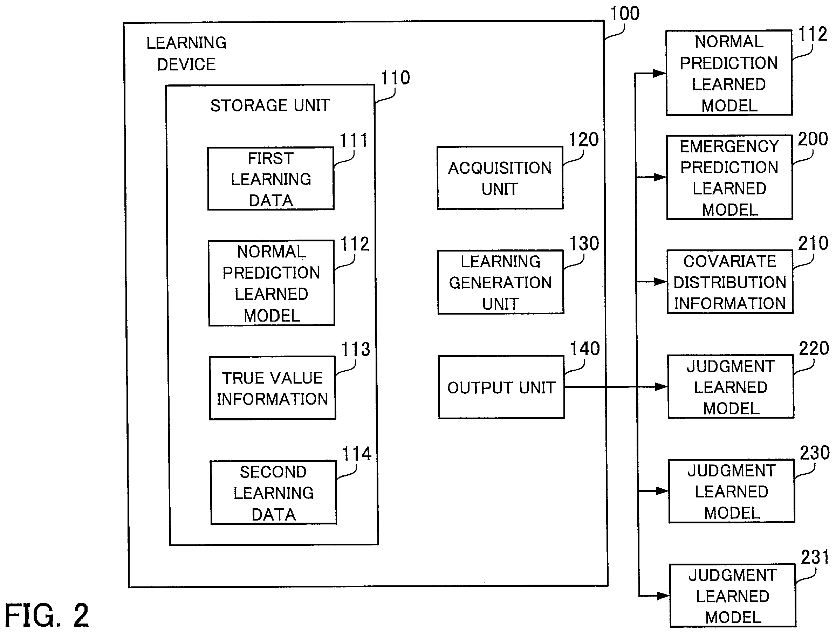

Fig. 2 is a block diagram showing the functions of the learning device in the first embodiment. The learning device 100 includes a storage unit 110, an acquisition unit 120, a learning generation unit 130 and an output unit 140.

The storage unit 110 may be implemented as a storage area reserved in the volatile storage device 102 or the nonvolatile storage device 103.

Part or all of the acquisition unit 120, the learning generation unit 130 and the output unit 140 may be implemented by the processing circuitry. Further, part or all of the acquisition unit 120, the learning generation unit 130 and the output unit 140 may be implemented as modules of a program executed by the processor 101. For example, the program executed by the processor 101 is referred to also as a learning program. The learning program has been recorded in a record medium, for example.

The storage unit 110 may store first learning data 111, a normal prediction learned model 112, true value information 113 and second learning data 114.

The first learning data 111 is information indicating at least one of weather at a first spot at a plurality of times and congestion information as information regarding congestion. For example, the first spot is a certain station. The weather is fine weather, cloudy weather, rain, typhoon, torrential rain, or the like. Incidentally, fine weather, cloudy weather and rain are normal weather. Typhoon and torrential rain are emergency weather. The congestion information is information indicating whether or not an event is ongoing at the first spot or in the vicinity of the first spot. The congestion information when no event is ongoing represents normality. The congestion information when an event is ongoing represents emergency. Incidentally, in cases where the first spot is a station, for example, the event is an event held in the station or an event held in the vicinity of the station (e.g., soccer or baseball). Further, in cases where the first spot is a station, the first learning data 111 can include operation schedule information (i.e., train schedule) on trains traveling through the station and operation information on the trains traveling through the station. Incidentally, the operation information on the trains is information indicating whether an accident (e.g., derailment accident) has occurred or not, for example. Then, the operation information when no accident has occurred represents normality. The operation information when an accident has occurred represents emergency. Furthermore, the first learning data 111 may also be generated by a user.

When information indicating at least one of the congestion information and the weather at the first spot at a certain time (referred to also as first information, for example) is inputted thereto, the normal prediction learned model 112 outputs the number of people in normal times at the first spot at the certain time. Further, in cases where the first spot is a station, when information indicating at least one of the congestion information and the weather at the first spot at a certain time and information indicating at least one of the operation schedule information on the trains and the operation information on the trains are inputted thereto, the normal prediction learned model 112 outputs the number of people in normal times at the first spot at the certain time.

The true value information 113 includes true values indicating the numbers of people in normal times at the first spot at a plurality of times and true values indicating the numbers of people in emergency times at the first spot at a plurality of times. Incidentally, the true values may be referred to also as learning true values.

The second learning data 114 is information indicating at least one of the congestion information and the weather at a spot other than the first spot at a plurality of times. For example, in cases where the first spot is Yokohama, the spot other than the first spot can be Osaka, Nagoya or the like. In cases where the spot other than the first spot is a station, the second learning data 114 can include the operation information on trains traveling through the station.

The acquisition unit 120 acquires the first learning data 111, the normal prediction learned model 112, the true value information 113 and the second learning data 114. For example, the acquisition unit 120 acquires the first learning data 111, the normal prediction learned model 112, the true value information 113 and the second learning data 114 from the storage unit 110. Alternatively, for example, the acquisition unit 120 acquires the first learning data 111, the normal prediction learned model 112, the true value information 113 and the second learning data 114 from an external device.

The learning generation unit 130 generates an emergency prediction learned model 200 by using the first learning data 111, the normal prediction learned model 112 and the true value information 113. When information indicating at least one of the congestion information and the weather at the first spot at a certain time is inputted thereto, the emergency prediction learned model 200 outputs the number of people in emergency times at the first spot at the certain time. Further, in cases where the first spot is a station, when information indicating at least one of the congestion information and the weather at the first spot at a certain time and information indicating at least one of the operation schedule information on the trains and the operation information on the trains are inputted thereto, the emergency prediction learned model 200 outputs the number of people in emergency times at the first spot at the certain time.

Next, the generation of the emergency prediction learned model will be explained in detail below.

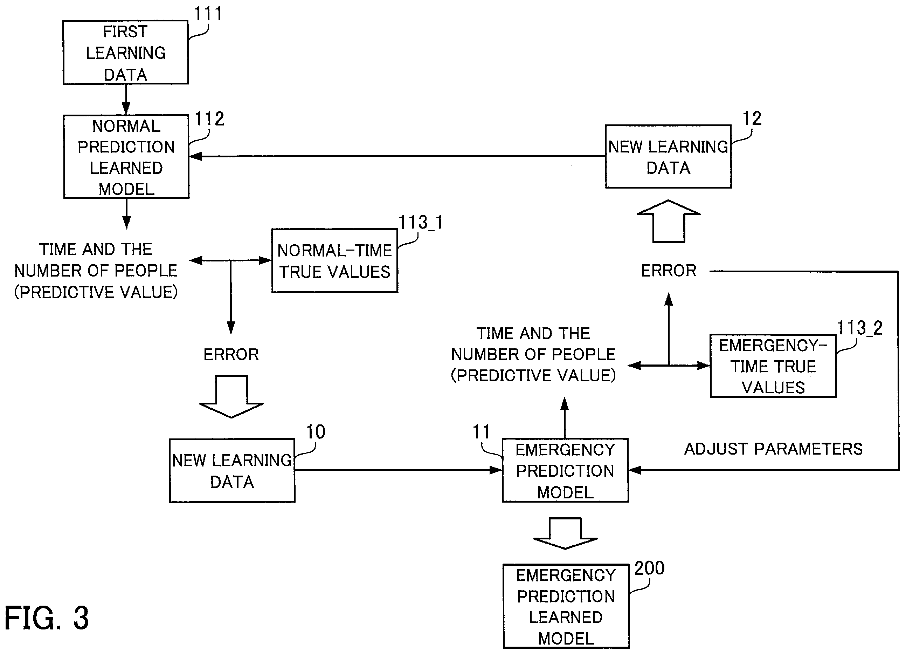

Fig. 3 is a diagram (No. 1) for explaining the generation of the emergency prediction learned model in the first embodiment. Referring to Fig. 3, a description will be given of a case where the emergency prediction learned model 200 is generated by means of learning. Gradient Boosting Decision Tree (GBDT), Long Short Term Memory (LSTM) or the like may be used in the learning.

The learning generation unit 130 inputs the first learning data 111 to the normal prediction learned model 112. Accordingly, the normal prediction learned model 112 outputs the number of people at the first spot at a certain time. For example, when the first learning data 111 is information indicating the weather at the first spot at 8 o'clock, the learning generation unit 130 inputs the information indicating the weather at the first spot at 8 o'clock to the normal prediction learned model 112. Accordingly, the normal prediction learned model 112 outputs the number of people at the first spot at 8 o'clock. Further, for example, when the first learning data 111 is the congestion information at the first spot at 9 o'clock and the congestion information indicates that an event is ongoing at the first spot, the learning generation unit 130 inputs the congestion information at the first spot at 9 o'clock to the normal prediction learned model 112. Accordingly, the normal prediction learned model 112 outputs the number of people at the first spot at 9 o'clock. Further, the normal prediction learned model 112 outputs a greater number of people since an event is ongoing at the first spot. Incidentally, the value outputted by the normal prediction learned model 112 is referred to also as a predictive value.

Fig. 3 shows normal-time true values 113_1. The normal-time true values 113_1 are true values included in the true value information 113 and indicating the numbers of people in normal times at the first spot at a plurality of times.

The learning generation unit 130 calculates an error by comparing the predictive value and the normal-time true value 113_1. For example, the learning generation unit 130 calculates the error by comparing the predictive value based on the information indicating the weather at the first spot at 8 o'clock and the true value indicating the number of people at the first spot at 8 o'clock included in the normal-time true values 113_1. As above, the learning generation unit 130 calculates the error by comparing the predictive value and the true value on the basis of the same time.

As above, the learning generation unit 130 calculates the numbers of people at the first spot at a plurality of times as a plurality of predictive values by using the first learning data 111 and the normal prediction learned model 112. Then, the learning generation unit 130 calculates a plurality of errors based on the normal-time true values 113_1 in the true value information 113 and the plurality of predictive values.

The learning generation unit 130 generates new learning data 10 based on the plurality of errors. The generation of the new learning data 10 will be described in detail below.

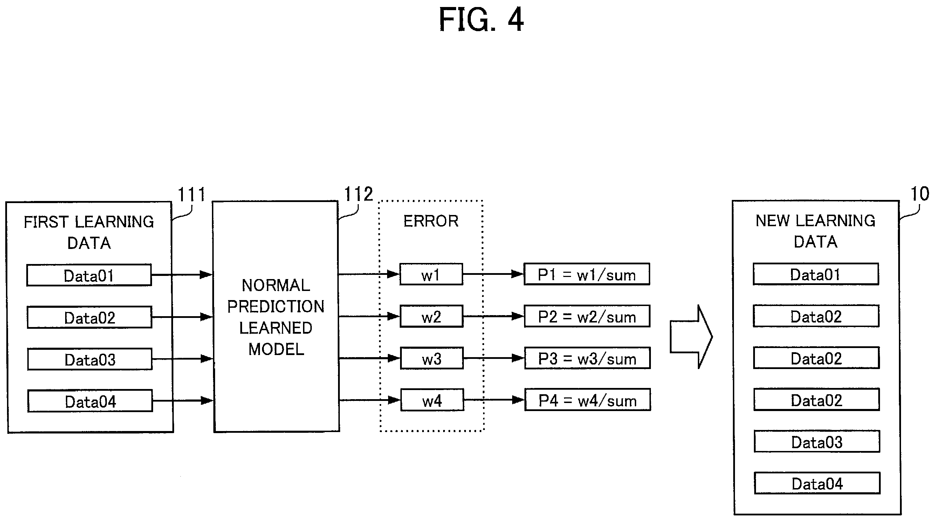

Fig. 4 is a diagram (No. 1) showing an example of a new learning data generation method in the first embodiment. Fig. 4 shows Data01 to Data04 as the first learning data 111. For example, Data01 is information indicating the weather at the first spot at 8 o'clock. For example, Data02 is information indicating the weather at the first spot at 8:30. For example, Data03 is information indicating the weather at the first spot at 9 o'clock. For example, Data04 is information indicating the weather at the first spot at 9:30.

As explained above, Data01 to Data04 are inputted to the normal prediction learned model 112. Accordingly, four predictive values are outputted. The learning generation unit 130 calculates errors w1 to w4 by comparing the four predictive values and the normal-time true values 113_1. The learning generation unit 130 calculates a proportion of each of the plurality of errors w1 to w4 in all the errors based on the errors w1 to w4. For example, the learning generation unit 130 calculates the proportion P1 of the error w1 by using expression (1).$P 1 = \frac{w 1}{sum \left(w1+w2+w3+w4\right)}$

The learning generation unit 130 increases the number of pieces of data included in the first learning data 111 depending on the proportion. Here, the increased data is data whose proportion is a great value. The data whose proportion is a great value is data whose error is great. The data whose error is great is data in emergency times. Fig. 4 indicates that the number of pieces of the data Data02 is increased. Thus, Data02 can be regarded as data in emergency times. Then, Data01, Data03 and Data04 can be regarded as data in normal times.

As above, the learning generation unit 130 increases the number of pieces of data in emergency times included in the first learning data 111 depending on the proportion. The learning generation unit 130 generates the first learning data 111, in which the number of pieces of data in emergency times has been increased, as the new learning data 10.

Further, the learning generation unit 130 generates a normal-time covariate distribution based on the data in normal times included in the first learning data 111.

Returning to Fig. 3, the explanation of the generation of the emergency prediction learned model is continued.

Fig. 3 indicates an emergency prediction model 11. Parameters as initial values have been set to the emergency prediction model 11.

The learning generation unit 130 inputs the new learning data 10 to the emergency prediction model 11. Here, by inputting the new learning data 10 to the emergency prediction model 11, the emergency prediction model 11 is learned by using a large number of pieces of data in emergency times.

The emergency prediction model 11 outputs the number of people in emergency times at the first spot at a certain time. Further, in cases where the first spot is a station, when information indicating at least one of the congestion information and the weather at the first spot at a certain time and information indicating at least one of the operation schedule information on the trains and the operation information on the trains are inputted thereto, the emergency prediction model 11 outputs the number of people in emergency times at the first spot at the certain time. Incidentally, the value outputted by the emergency prediction model 11 is referred to also as a predictive value.

Fig. 3 indicates emergency-time true values 113_2. The emergency-time true values 113_2 are true values included in the true value information 113 and indicating the numbers of people in emergency times at the first spot at a plurality of times.

The learning generation unit 130 calculates an error by comparing the predictive value and the emergency-time true value 113_2. For example, the learning generation unit 130 calculates the error by comparing the predictive value based on the information indicating the weather at the first spot at 9 o'clock and the true value indicating the number of people at the first spot at 9 o'clock included in the emergency-time true values 113_2. As above, the learning generation unit 130 calculates the error by comparing the predictive value and the true value on the basis of the same time. The learning generation unit 130 generates new learning data 12 based on the error. The generation of the new learning data 12 will be described in detail below.

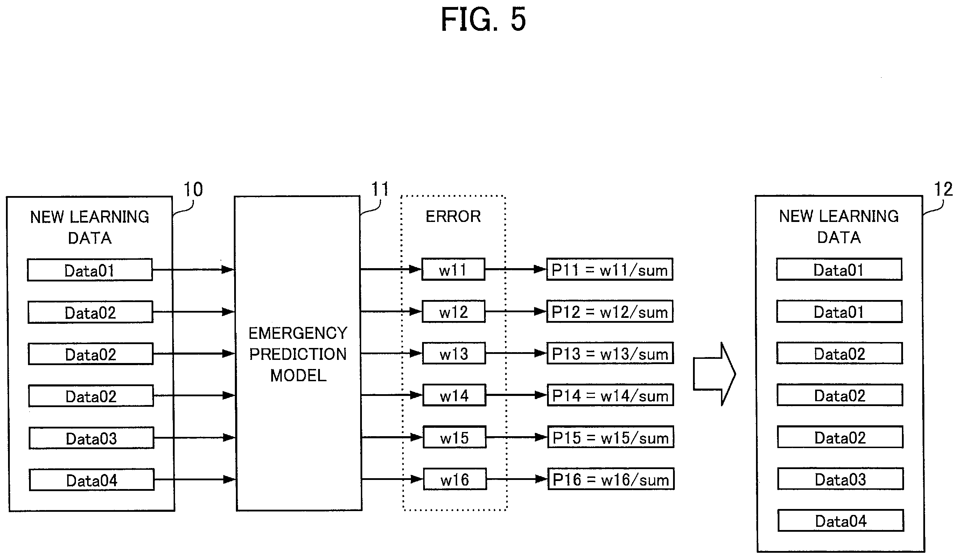

Fig. 5 is a diagram (No. 2) showing the example of the new learning data generation method in the first embodiment. Fig. 5 shows Data01 to Data04 as the new learning data 10. As explained earlier, the new learning data 10 is inputted to the emergency prediction model 11. Accordingly, six predictive values are outputted. The learning generation unit 130 calculates errors w11 to w16 by comparing the six predictive values and the emergency-time true values 113_2. The learning generation unit 130 calculates the proportion of each of the plurality of errors w11 to w16 in all the errors based on the errors w11 to w16.

The learning generation unit 130 increases the number of pieces of data included in the new learning data 10 depending on the proportion. The learning generation unit 130 generates the new learning data 12 by increasing the number of pieces of data included in the new learning data 10. Here, the new learning data 12 is referred to also as learning information including the first learning data 111.

Further, the learning generation unit 130 generates an emergency-time covariate distribution based on the data in emergency times included in the new learning data 10.

Returning to Fig. 3, the explanation of the generation of the emergency prediction learned model is continued.

If the error when the emergency prediction model 11 has been made to perform the learning by using data in emergency times is greater than a predetermined threshold value, the learning generation unit 130 adjusts the parameters in the emergency prediction model 11. That is, since the emergency prediction model 11 forms a neural network, the learning generation unit 130 adjusts the parameters as weights used in the neural network.

The learning generation unit 130 inputs the new learning data 12 to the normal prediction learned model 112. Then, the learning generation unit 130 generates the new learning data 10. The learning generation unit 130 inputs the generated new learning data 10 to the emergency prediction model 11. The learning generation unit 130 repeats the process of inputting learning data to the normal prediction learned model 112 and the emergency prediction model 11 until the error when the emergency prediction model 11 has been made to learn data in emergency times becomes less than or equal to the threshold value and the error converges. Then, when the error has converged, the emergency prediction learned model 200 is generated.

As above, the learning generation unit 130 generates the emergency prediction learned model 200 by using the emergency-time true values 113_2 in the true value information 113 and the new learning data 10.

It has been described above that the normal-time covariate distribution and the emergency-time covariate distribution are generated. Information including the normal-time covariate distribution and the emergency-time covariate distribution is referred to as covariate distribution information 210.

The above explanation of Fig. 3 has been given of the case where the emergency prediction model 11 is learned. The learning generation unit 130 may also make the normal prediction learned model 112 perform relearning. In short, the learning generation unit 130 makes the normal prediction learned model 112 perform the relearning while making the emergency prediction model 11 perform the learning. The relearning will be explained below.

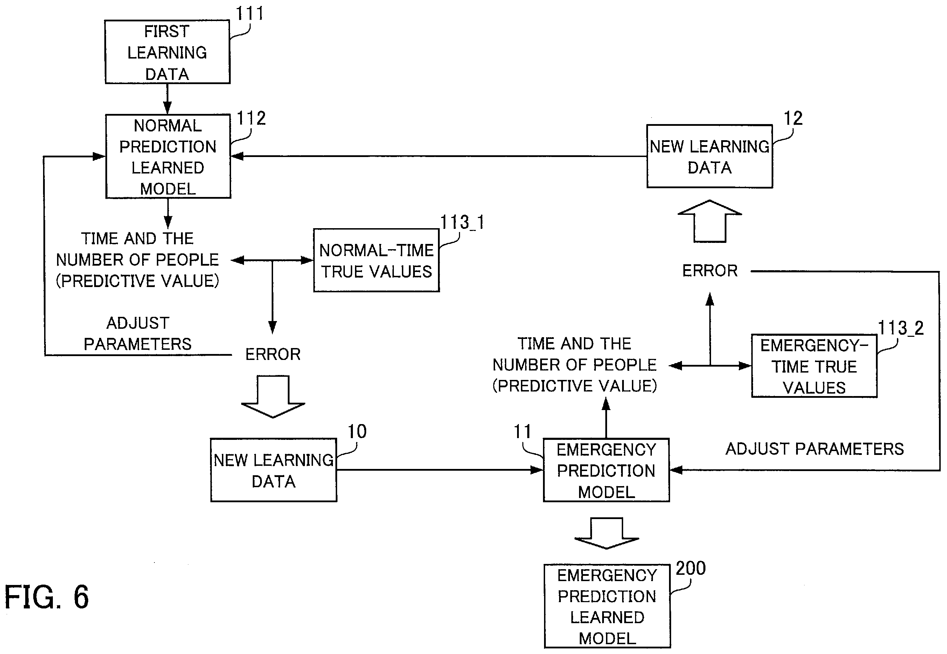

Fig. 6 is a diagram for explaining the relearning in the first embodiment. The learning generation unit 130 calculates the number of people at the first spot at a certain time as the predictive value by using the data in normal times included in the first learning data 111 or the new learning data 12 and the normal prediction learned model 112. The learning generation unit 130 calculates the error between the normal-time true value 113_1 and the predictive value. When the calculated error is included in a predetermined range, the learning generation unit 130 adjusts parameters in the normal prediction learned model 112. In short, since the normal prediction learned model 112 forms a neural network, the learning generation unit 130 adjusts the parameters as weights used in the neural network. Incidentally, the range is a range of small values.

As above, the learning generation unit 130 relearns the normal prediction learned model 112. By the relearning, the learning generation unit 130 is capable of reducing the error. In other words, the learning generation unit 130 is capable of increasing the prediction accuracy of the normal prediction learned model 112.

The above description with reference to Figs. 3 and 6 has been given of the case where the process of inputting learning data to the normal prediction learned model 112 and the emergency prediction model 11 is repeated. A method different from that of Figs. 3 and 6 will be described below.

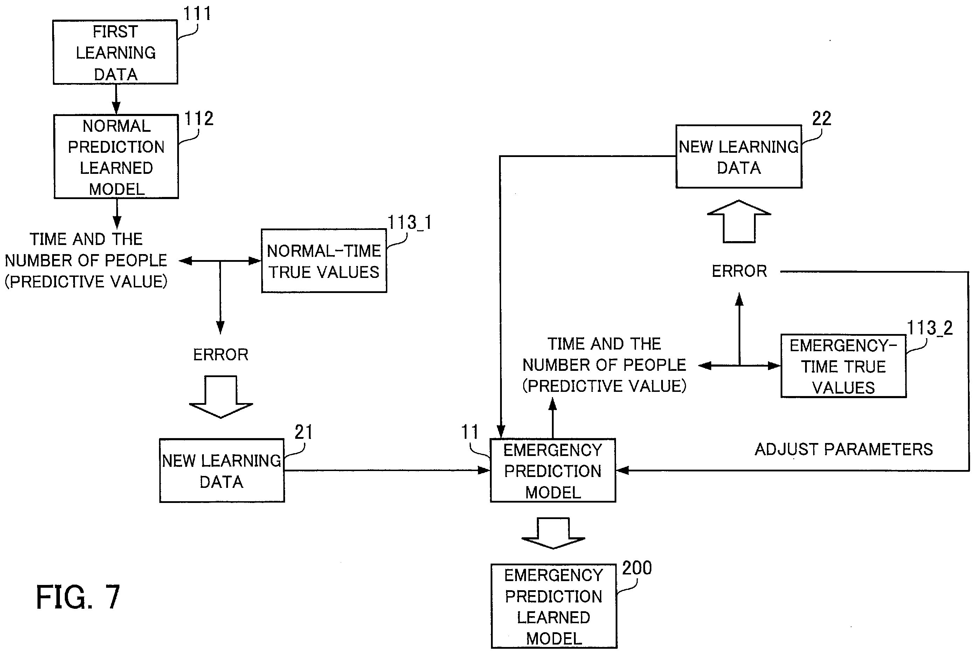

Fig. 7 is a diagram (No. 2) for explaining the generation of the emergency prediction learned model in the first embodiment.

The learning generation unit 130 inputs the first learning data 111 to the normal prediction learned model 112. Accordingly, the normal prediction learned model 112 outputs the number of people at the first spot at a certain time.

The learning generation unit 130 calculates the error by comparing the predictive value and the normal-time true value 113_1. The learning generation unit 130 identifies data included in the first learning data 111 and corresponding to an error greater than or equal to a predetermined threshold value. Here, the normal prediction learned model 112 has not learned data in emergency times, and thus the error becomes large when data in emergency times is inputted to the normal prediction learned model 112. Therefore, such data whose error between the predictive value and the normal-time true value 113_1 is greater than or equal to the threshold value can be regarded as data in emergency times. Thus, the identified data are data in emergency times. The learning generation unit 130 generates the identified data in emergency times as new learning data 21. Thus, all of the data included in the new learning data 21 are data in emergency times.

As above, the learning generation unit 130 identifies data in emergency times out of the first learning data 111 by using the first learning data 111, the normal prediction learned model 112, and the normal-time true values 113_1 in the true value information 113. Then, the learning generation unit 130 generates the identified data in emergency times as the new learning data 21.

The learning generation unit 130 identifies data in normal times out of the first learning data 111 based on the new learning data 21 (i.e., the data in emergency times). In short, the learning generation unit 130 identifies the data in normal times by excluding the new learning data 21 from the first learning data 111. The learning generation unit 130 generates the normal-time covariate distribution based on the data in normal times. The learning generation unit 130 generates the emergency-time covariate distribution based on the new learning data 21 (i.e., the data in emergency times).

The learning generation unit 130 inputs the new learning data 21 to the emergency prediction model 11. The emergency prediction model 11 outputs the number of people at the first spot at a certain time. Incidentally, the value outputted by the emergency prediction model 11 is referred to also as a predictive value.

The learning generation unit 130 calculates the error by comparing the predictive value and the emergency-time true value 113_2. The learning generation unit 130 generates data included in the new learning data 21 and corresponding to an error greater than or equal to a predetermined threshold value as new learning data 22. Here, such data corresponding to an error greater than or equal to the threshold value are data in emergency times in a case where the learning has not been performed adequately.

Further, if the error when the emergency prediction model 11 has been made to perform the learning by using data in emergency times is greater than or equal to the threshold value, the learning generation unit 130 adjusts the parameters in the emergency prediction model 11.

Since the parameters in the emergency prediction model 11 have been adjusted, the learning generation unit 130 inputs the new learning data 22 to the emergency prediction model 11 in order to confirm that the prediction accuracy of the emergency prediction model 11 has increased. The learning generation unit 130 repeats the process of inputting learning data to the emergency prediction model 11 until the error when the learning of data in emergency times has been performed by the emergency prediction model 11 becomes less than the threshold value and the error converges. Then, when the error has converged, the emergency prediction learned model 200 is generated.

As above, the learning generation unit 130 generates the emergency prediction learned model 200 by using the new learning data 21 and the emergency-time true values 113_2 in the true value information 113.

It has been described above that the normal-time covariate distribution and the emergency-time covariate distribution are generated. Information including the normal-time covariate distribution and the emergency-time covariate distribution is referred to as the covariate distribution information 210.

The learning methods of the emergency prediction model 11 in Figs. 3, 6 and 7 have a characteristic in that the learning can be carried out without the need of putting a label indicating whether or not data is data in normal times or data in emergency times on the first learning data 111. Thus, by using the learning methods, the burden on a user for preparing the learning data can be lightened.

Returning to Fig. 2, the functions of the learning generation unit 130 will be described further.

The learning generation unit 130 generates a judgment learned model 220 that outputs information indicating whether input information is data in normal times or data in emergency times when information indicating at least one of the congestion information and the weather at the first spot at a certain time is inputted thereto, by using the first learning data 111. For example, when information indicating that the weather at the first spot at 10 o'clock is fine weather is inputted thereto, the judgment learned model 220 outputs information indicating that the input information is data in normal times. Further, for example, when information indicating that the weather at the first spot at 11 o'clock is torrential rain is inputted thereto, the judgment learned model 220 outputs information indicating that the input information is data in emergency times. Here, the judgment learned model 220 is referred to also as a first judgment learned model.

It is also possible for the learning generation unit 130 to generate a judgment learned model 220 that outputs information indicating whether input information, including information indicating at least one of the congestion information and the weather at the first spot at a certain time and the operation information, is data in normal times or data in emergency times when the information indicating at least one of the congestion information and the weather at the first spot at a certain time and the operation information are inputted thereto, by using the first learning data 111.

Further, it is also possible for the learning generation unit 130 to generate a judgment learned model 220 that outputs a probability that input information is data in normal times and a probability that the input information is data in emergency times when information indicating at least one of the congestion information and the weather at the first spot at a certain time is inputted thereto, by using the first learning data 111.

Furthermore, it is also possible for the learning generation unit 130 to generate a judgment learned model 220 that outputs a probability that input information, including information indicating at least one of the congestion information and the weather at the first spot at a certain time and the operation information, is data in normal times and a probability that the input information is data in emergency times when the information indicating at least one of the congestion information and the weather at the first spot at a certain time and the operation information are inputted thereto, by using the first learning data 111.

The learning generation unit 130 generates each judgment learned model 230, 231 that outputs information indicating whether input information is data in normal times or data in emergency times when information indicating at least one of the congestion information and the weather at a spot other than the first spot at a certain time (referred to also as second information, for example) is inputted thereto, by using the second learning data 114. For example, the learning generation unit 130 generates the judgment learned model 230 that outputs information indicating whether input information is data in normal times or data in emergency times when information indicating at least one of the congestion information and the weather at Osaka at a certain time is inputted thereto, by using the second learning data 114. Further, for example, the learning generation unit 130 generates the judgment learned model 231 that outputs information indicating whether input information is data in normal times or data in emergency times when information indicating at least one of the congestion information and the weather at Nagoya at a certain time is inputted thereto, by using the second learning data 114. Here, each of the judgment learned models 230 and 231 is referred to also as a second judgment learned model.

Incidentally, the spot other than the first spot is desired to be a spot near to the first spot.

It is also possible for the learning generation unit 130 to generate each judgment learned model 230, 231 that outputs information indicating whether input information, including information indicating at least one of the congestion information and the weather at a spot other than the first spot at a certain time and the operation information, is data in normal times or data in emergency times when the information indicating at least one of the congestion information and the weather at a spot other than the first spot at a certain time and the operation information are inputted thereto, by using the second learning data 114.

Further, it is also possible for the learning generation unit 130 to generate each judgment learned model 230, 231 that outputs a probability that input information is data in normal times and a probability that the input information is data in emergency times when information indicating at least one of the congestion information and the weather at a spot other than the first spot at a certain time is inputted thereto, by using the second learning data 114.

Furthermore, it is also possible for the learning generation unit 130 to generate each judgment learned model 230, 231 that outputs a probability that input information, including information indicating at least one of the congestion information and the weather at a spot other than the first spot at a certain time and the operation information, is data in normal times and a probability that the input information is data in emergency times when the information indicating at least one of the congestion information and the weather at a spot other than the first spot at a certain time and the operation information are inputted thereto, by using the second learning data 114. Incidentally, the above description has been given of cases where two judgment learned models (i.e., the judgment learned models 230 and 231) are generated. The learning generation unit 130 may also be configured to generate one judgment learned model (e.g., the judgment learned model 230).

As shown in Fig. 2, the learning device 100 generates the emergency prediction learned model 200, the covariate distribution information 210, the judgment learned model 220, the judgment learned model 230 and the judgment learned model 231. Further, in cases where the normal prediction learned model 112 has been relearned, the learning device 100 generates the relearned normal prediction learned model 112.

The output unit 140 outputs information. For example, the output unit 140 outputs the information to the storage unit 110. For example, the output unit 140 outputs the information to an external device. Incidentally, the information is, for example, the normal prediction learned model 112, the emergency prediction learned model 200, the covariate distribution information 210, the judgment learned model 220, the judgment learned model 230 and the judgment learned model 231. The output unit 140 may output the relearned normal prediction learned model 112.

According to the learning phase, the learning device 100 prepares the normal prediction learned model 112 and the emergency prediction learned model 200. As will be described later, high-accuracy predictions in normal times and in emergency times can be made by using the normal prediction learned model 112 and the emergency prediction learned model 200. Thus, thanks to the preparation of the normal prediction learned model 112 and the emergency prediction learned model 200, high-accuracy predictions in normal times and in emergency times can be made.

Next, a utilization phase will be described below.

### <Utilization Phase>

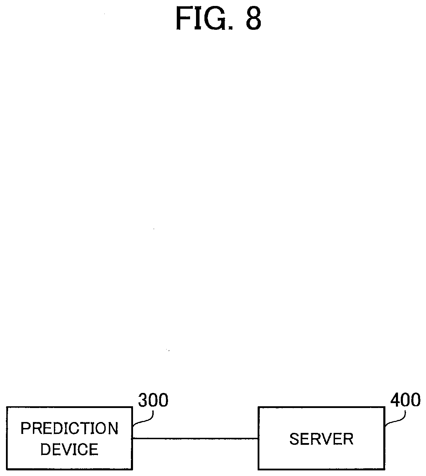

Fig. 8 is a diagram showing a prediction system in the first embodiment. The prediction system includes a prediction device 300 and a server 400. The prediction device 300 executes a prediction method. The prediction device 300 includes a processor, a volatile storage device and a nonvolatile storage device. Further, the prediction device 300 may include a processing circuitry. The server 400 is a cloud server, for example.

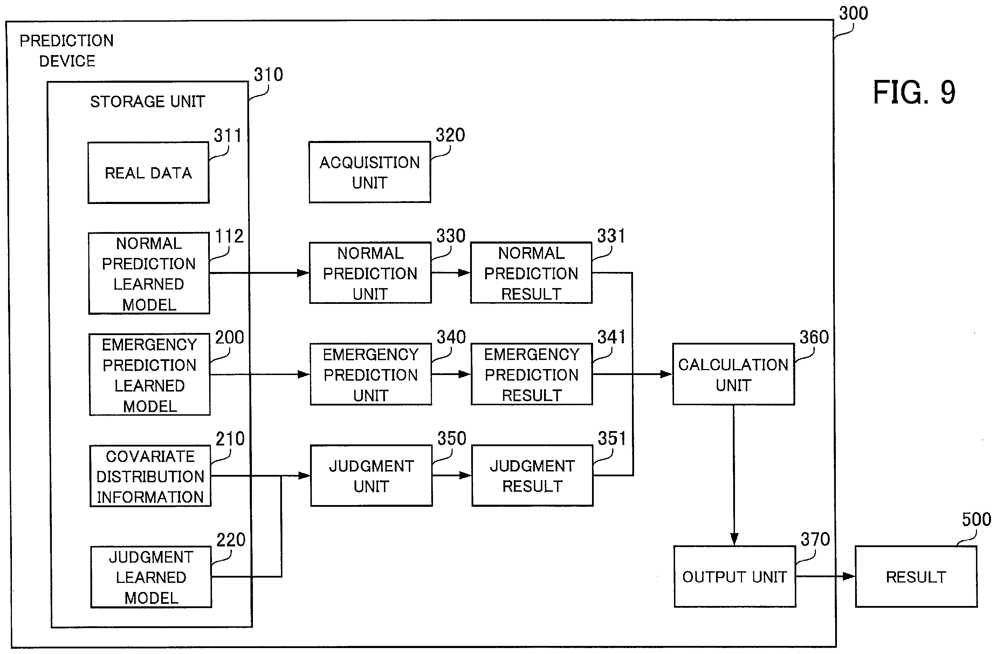

Fig. 9 is a block diagram showing functions of the prediction device in the first embodiment. The prediction device 300 includes a storage unit 310, an acquisition unit 320, a normal prediction unit 330, an emergency prediction unit 340, a judgment unit 350, a calculation unit 360 and an output unit 370.

The storage unit 310 may be implemented as a storage area reserved in the volatile storage device or the nonvolatile storage device included in the prediction device 300.

Part or all of the acquisition unit 320, the normal prediction unit 330, the emergency prediction unit 340, the judgment unit 350, the calculation unit 360 and the output unit 370 may be implemented by the processing circuitry included in the prediction device 300. Further, part or all of the acquisition unit 320, the normal prediction unit 330, the emergency prediction unit 340, the judgment unit 350, the calculation unit 360 and the output unit 370 may be implemented as modules of a program executed by the processor included in the prediction device 300. For example, the program is referred to also as a prediction program. The prediction program has been recorded in a record medium, for example.

The storage unit 310 may store real data 311, the normal prediction learned model 112, the emergency prediction learned model 200, the covariate distribution information 210 and the judgment learned model 220.

The real data 311 is information indicating at least one of the weather at the first spot at a certain time and the congestion information as information regarding congestion. Further, in cases where the first spot is a station, the real data 311 may include the operation schedule information (i.e., train schedule) on the trains traveling through the station and the operation information on the trains traveling through the station.

Here, the server 400 may store the real data 311, the normal prediction learned model 112, the emergency prediction learned model 200, the covariate distribution information 210 and the judgment learned model 220.

Incidentally, in cases where the normal prediction learned model 112 has been relearned by the learning device 100, the normal prediction learned model 112 stored in the storage unit 310 or the server 400 is the relearned learned model.

The acquisition unit 320 acquires the real data 311, the normal prediction learned model 112, the emergency prediction learned model 200, the covariate distribution information 210 and the judgment learned model 220. For example, the acquisition unit 320 acquires the real data 311, the normal prediction learned model 112, the emergency prediction learned model 200, the covariate distribution information 210 and the judgment learned model 220 from the storage unit 310. Alternatively, for example, the acquisition unit 320 acquires the real data 311, the normal prediction learned model 112, the emergency prediction learned model 200, the covariate distribution information 210 and the judgment learned model 220 from the server 400.

The normal prediction unit 330 predicts the number of people at the first spot at a time indicated by the real data 311 by using the real data 311 and the normal prediction learned model 112. The result of the prediction is referred to as a normal prediction result 331. That is, the normal prediction result 331 indicates the number of people in normal times.

The emergency prediction unit 340 predicts the number of people at the first spot at a time indicated by the real data 311 by using the real data 311 and the emergency prediction learned model 200. The result of the prediction is referred to as an emergency prediction result 341. That is, the emergency prediction result 341 indicates the number of people in emergency times.

The judgment unit 350 judges whether the real data 311 is data in normal times or data in emergency times by using the real data 311 and the judgment learned model 220. The result of the judgment is referred to as a judgment result 351.

It is also possible for the judgment unit 350 to judge whether the real data 311 is data in normal times or data in emergency times by using the real data 311, the covariate distribution information 210 and the judgment learned model 220. By use of the covariate distribution information 210, the judgment unit 350 is capable of making a high-accuracy judgment.

The calculation unit 360 calculates the number of people at the first spot at a time indicated by the real data 311 by using the normal prediction result 331, the emergency prediction result 341 and the judgment result 351. For example, when the judgment result 351 indicates that the real data 311 is data in normal times, the calculation unit 360 calculates the result indicated by the normal prediction result 331 as the number of people at the first spot at the time indicated by the real data 311. This calculation may be considered as follows. The calculation unit 360 calculates the number of people at the first spot at the time indicated by the real data 311 by multiplying the normal prediction result 331 by "1" and multiplying the emergency prediction result 341 by "0". Further, for example, when the judgment result 351 indicates that the real data 311 is data in emergency times, the calculation unit 360 calculates the result indicated by the emergency prediction result 341 as the number of people at the first spot at the time indicated by the real data 311.

Here, as mentioned earlier, it is also possible for the judgment learned model 220 to output the probability that the input information is data in normal times and the probability that the input information is data in emergency times. In cases where the judgment learned model 220 is capable of outputting the two probabilities, the judgment unit 350 judges the probability that the real data 311 is data in normal times and the probability that the real data 311 is data in emergency times, by using the real data 311 and the judgment learned model 220. Then, the result of the judgment is referred to as the judgment result 351. It is also possible for the judgment unit 350 to judge the probability that the real data 311 is data in normal times and the probability that the real data 311 is data in emergency times, by using the real data 311, the covariate distribution information 210 and the judgment learned model 220.

In the cases where the judgment learned model 220 is capable of outputting the two probabilities, the calculation unit 360 calculates the number of people at the first spot at the time indicated by the real data 311 by using the normal prediction result 331, the emergency prediction result 341 and the judgment result 351. For example, the judgment result 351 is assumed to indicate that the probability "80%" of being data in normal times and the probability "20%" of being data in emergency times. The calculation unit 360 calculates the number of people at the first spot at the time indicated by the real data 311 by using a weighted average. Specifically, the calculation unit 360 calculates the number of people by using expression (2).$\begin{matrix}THE NUMBER OF PEOPLE \\ = \left(\begin{matrix}NORMAL PREDICTION RESULT \left(THE NUMBER OF PEOPLE\right) \times 0.8 \\ + EMERGENCY PREDICTION RESULT \left(THE NUMBER OF PEOPLE\right) \\ \times 0.2\end{matrix}\right) / \left(0.8+0.2\right)\end{matrix}$

As above, the calculation unit 360 may calculate the number of people by using the expression (2).

The output unit 370 outputs the result 500 of the calculation. For example, the output unit 370 outputs the result 500 to a display connected to the prediction device 300. Alternatively, for example, the output unit 370 outputs the result 500 to a different device.

According to the utilization phase, the prediction device 300 makes high-accuracy predictions in normal times and in emergency times by using the normal prediction learned model 112 and the emergency prediction learned model 200. Thus, the prediction device 300 is capable of making high-accuracy predictions in normal times and in emergency times.

### Second Embodiment

Next, a second embodiment will be described below. In the second embodiment, the description will be given mainly of features different from those in the first embodiment. In the second embodiment, the description is omitted for features in common with the first embodiment.

In the first embodiment, a description was given of cases where the judgment learned model 220 is used. In the second embodiment, a description will be given of cases where the judgment learned models 230 and 231 are used.

Here, the server 400 may store the judgment learned models 230 and 231.

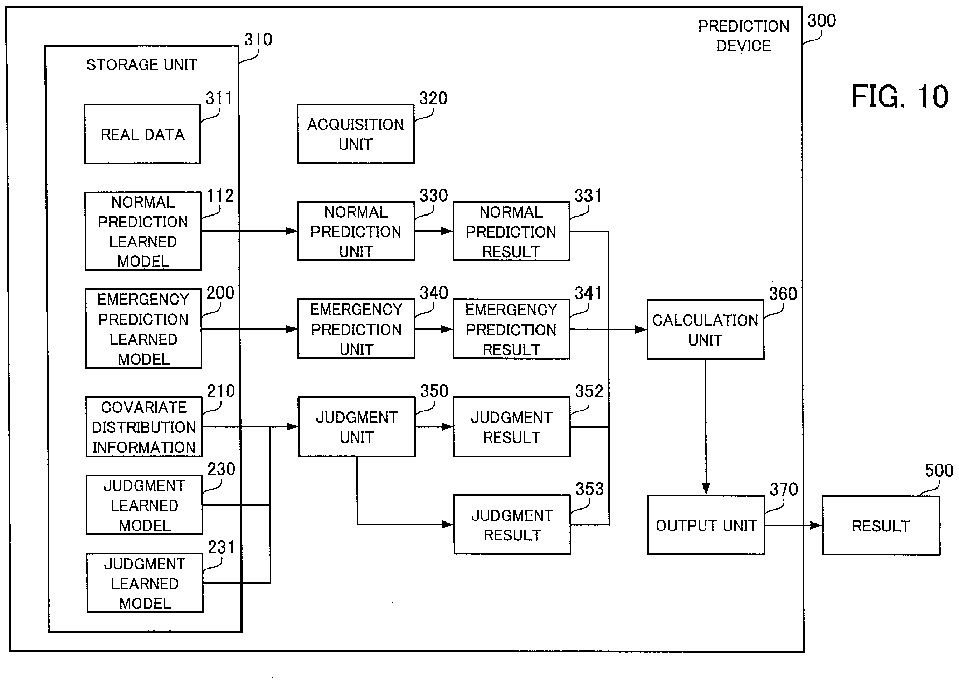

Fig. 10 is a block diagram showing functions of a prediction device in the second embodiment. The storage unit 310 may store the judgment learned models 230 and 231.

The acquisition unit 320 acquires the judgment learned models 230 and 231 instead of the judgment learned model 220. For example, the acquisition unit 320 acquires the judgment learned models 230 and 231 from the storage unit 310. Alternatively, for example, the acquisition unit 320 acquires the judgment learned models 230 and 231 from the server 400.

The judgment unit 350 judges whether the real data 311 is data in normal times or data in emergency times by using the real data 311 and the judgment learned model 230. The result of the judgment is referred to as a judgment result 352. It is also possible for the judgment unit 350 to judge whether the real data 311 is data in normal times or data in emergency times by using the real data 311, the covariate distribution information 210 and the judgment learned model 230.

The judgment unit 350 judges whether the real data 311 is data in normal times or data in emergency times by using the real data 311 and the judgment learned model 231. The result of the judgment is referred to as a judgment result 353. It is also possible for the judgment unit 350 to judge whether the real data 311 is data in normal times or data in emergency times by using the real data 311, the covariate distribution information 210 and the judgment learned model 231.

The calculation unit 360 calculates the number of people at the first spot at the time indicated by the real data 311 by using the normal prediction result 331, the emergency prediction result 341 and the judgment results 352 and 353. For example, when the judgment results 352 and 353 indicate that the real data 311 is data in normal times, the calculation unit 360 calculates the result indicated by the normal prediction result 331 as the number of people at the first spot at the time indicated by the real data 311. Further, for example, when the judgment results 352 and 353 indicate that the real data 311 is data in emergency times, the calculation unit 360 calculates the result indicated by the emergency prediction result 341 as the number of people at the first spot at the time indicated by the real data 311. When the judgment result 352 and the judgment result 353 differ from each other, the calculation unit 360 judges that the probability that the real data 311 is data in normal times is "50 %" and the probability that the real data 311 is data in emergency times is "50 %". The calculation unit 360 calculates the number of people at the first spot at the time indicated by the real data 311 by using the weighted average like the expression (2).

Here, as mentioned earlier, it is also possible for each judgment learned model 230, 231 to output the probability that the input information is data in normal times and the probability that the input information is data in emergency times. In cases where the judgment learned model 230 is capable of outputting the two probabilities, the judgment unit 350 judges the probability that the real data 311 is data in normal times and the probability that the real data 311 is data in emergency times, by using the real data 311 and the judgment learned model 230. Then, the result of the judgment is referred to as the judgment result 352. In cases where the judgment learned model 231 is capable of outputting the two probabilities, the judgment unit 350 judges the probability that the real data 311 is data in normal times and the probability that the real data 311 is data in emergency times, by using the real data 311 and the judgment learned model 231. Then, the result of the judgment is referred to as the judgment result 353.

In cases where each judgment learned model 230, 231 is capable of outputting the two probabilities, the calculation unit 360 calculates the average of the probabilities of being data in normal times indicated by the judgment results 352 and 353. For example, when the average value is "80 %", the calculation unit 360 determines that the probability of being data in emergency times is "20 % (= 100 - 80)". It is also possible for the calculation unit 360 to calculate the average of the probabilities of being data in emergency times indicated by the judgment results 352 and 353 and thereafter calculate the probability of being data in normal times (e.g., 80 %) by using the average value (e.g., 20 %). The calculation unit 360 calculates the number of people at the first spot at the time indicated by the real data 311 as shown in the expression (2).

It is also possible for the calculation unit 360 to calculate the probability that the real data 311 is data in normal times and the probability that the real data 311 is data in emergency times, by using the real data 311, the covariate distribution information 210 and the judgment learned models 230 and 231. Specifically, the calculation unit 360 calculates the probability that the real data 311 is data in normal times (e.g., 60 %) and the probability that the real data 311 is data in emergency times (e.g., 40 %) by using the real data 311 and the judgment learned model 230. The calculation unit 360 calculates the probability that the real data 311 is data in normal times (e.g., 60 %) and the probability that the real data 311 is data in emergency times (e.g., 40 %) by using the real data 311 and the judgment learned model 231. The calculation unit 360 calculates the probability that the real data 311 is data in normal times (e.g., 60 %) by using the normal-time covariate distribution included in the covariate distribution information 210 and the real data 311. The calculation unit 360 calculates the probability that the real data 311 is data in emergency times (e.g., 40 %) by using the emergency-time covariate distribution included in the covariate distribution information 210 and the real data 311. The calculation unit 360 calculates the probability that the real data 311 is data in normal times by using coefficients. For example, the calculation unit 360 calculates the probability that the real data 311 is data in normal times by using expression (3). Here, a coefficient for the output result of the judgment learned model 230 is assumed to be 0.4. A coefficient for the output result of the judgment learned model 231 is assumed to be 0.2. A coefficient for the result when using the normal-time covariate distribution is assumed to be 0.4.$0.6 = 0.6 \times 0.4 + 0.6 + 0.2 \times 0.6 + 0.4$

The calculation unit 360 calculates the probability of being data in normal times (e.g., 60 %) by multiplying the result by 100. When the probability is "60 %", the calculation unit 360 determines that the probability of being data in emergency times is "40 % (= 100 - 60)". The calculation unit 360 calculates the number of people at the first spot at the time indicated by the real data 311 by using the weighted average like the expression (2). The above description was given of the case where the probability of being data in emergency times is calculated after the probability of being data in normal times is calculated. However, it is also possible for the calculation unit 360 to calculate the probability that the real data 311 is data in normal times after calculating the probability of being data in emergency times according to a similar method.

Next, a concrete example will be described below.

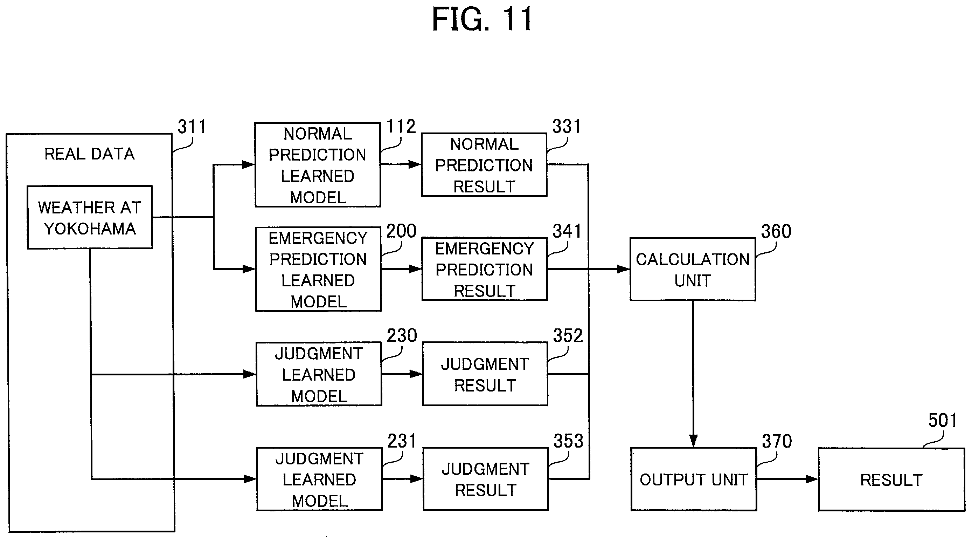

Fig. 11 is a diagram showing a concrete example of the second embodiment. The real data 311 includes information regarding the weather at Yokohama at 7 o'clock.

The normal prediction unit 330 predicts the number of people at Yokohama at 7 o'clock by using the information regarding the weather at Yokohama at 7 o'clock and the normal prediction learned model 112. The result of the prediction is the normal prediction result 331.

The emergency prediction unit 340 predicts the number of people at Yokohama at 7 o'clock by using the information regarding the weather at Yokohama at 7 o'clock and the emergency prediction learned model 200. The result of the prediction is the emergency prediction result 341.

Here, the judgment learned model 230 is assumed to be a learned model that outputs information indicating whether input information is data in normal times or data in emergency times when information regarding the weather at Osaka at a certain time is inputted thereto. The judgment learned model 231 is assumed to be a learned model that outputs information indicating whether input information is data in normal times or data in emergency times when information regarding the weather at Nagoya at a certain time is inputted thereto.

The judgment unit 350 judges whether the information regarding the weather at Yokohama at 7 o'clock is data in normal times or data in emergency times by using the information regarding the weather at Yokohama at 7 o'clock and the judgment learned model 230. The result of the judgment is the judgment result 352.

The judgment unit 350 judges whether the information regarding the weather at Yokohama at 7 o'clock is data in normal times or data in emergency times by using the information regarding the weather at Yokohama at 7 o'clock and the judgment learned model 231. The result of the judgment is the judgment result 353.

The calculation unit 360 calculates the number of people at Yokohama at 7 o'clock by using the normal prediction result 331, the emergency prediction result 341, and the judgment results 352 and 353.

The output unit 370 outputs the result 501 of the calculation.

As described above, the judgment learned model 230 is a learned model that outputs information indicating whether the information regarding the weather at Osaka at a certain time is data in normal times or data in emergency times. Even so, the judgment unit 350 judges whether the information regarding the weather at Yokohama at 7 o'clock is data in normal times or data in emergency times by using the judgment learned model 230. The reason for making the judgment by using the judgment learned model 230 is as follows. The difference between the judgment learned model 220 and the judgment learned model 230 is the spot indicated by the learning data at the time of the learning. The contents of the judgment do not change even when the spot is different. For example, when information indicating that the weather at Yokohama is fine weather is inputted to the judgment learned model 220, the judgment learned model 220 outputs information indicating that the real data 311 is data in normal times. When information indicating that the weather at Osaka is fine weather is inputted to the judgment learned model 230, the judgment learned model 230 outputs information indicating that the real data 311 is data in normal times. As above, the contents of the judgment do not change. Thus, it can be considered that there is no problem even if the judgment learned model 230 is used instead of the judgment learned model 220. Therefore, the judgment unit 350 uses the judgment learned model 230. The reason why the judgment unit 350 uses the judgment learned model 231 is also the same.

As above, the judgment unit 350 is capable of judging the information regarding the weather at Yokohama without using the judgment learned model 220 as in the first embodiment.

In the second embodiment, the description has been given of the case where two judgment learned models are used. It is permissible even if one judgment learned model is used.

Features in the embodiments described above can be appropriately combined with each other while falling within scope of the appended claims.

### DESCRIPTION OF REFERENCE CHARACTERS

10: new learning data, 11: emergency prediction model, 12: new learning data, 21: new learning data, 22: new learning data, 100: learning device, 101: processor, 102: volatile storage device, 103: nonvolatile storage device, 110: storage unit, 111: first learning data, 112: normal prediction learned model, 113: true value information, 113_1: normal-time true value, 113_2: emergency-time true value, 114: second learning data, 120: acquisition unit, 130: learning generation unit, 140: output unit, 200: emergency prediction learned model, 210: covariate distribution information, 220: judgment learned model, 230: judgment learned model, 231: judgment learned model, 300: prediction device, 310: storage unit, 311: real data, 320: acquisition unit, 330: normal prediction unit, 331: normal prediction result, 340: emergency prediction unit, 341: emergency prediction result, 350: judgment unit, 351: judgment result, 352: judgment result, 353: judgment result, 360: calculation unit, 370: output unit, 400: server, 500: result, 501: result

## Claims

1. A learning device (100) comprising:
an acquisition unit (120) that acquires first learning data (111) as information indicating at least one of weather at a first spot at a plurality of times and congestion information as information regarding congestion, a normal prediction learned model (112) that outputs a number of people in normal times at the first spot at a certain time when first information indicating at least one of the congestion information and the weather at the first spot at the certain time is inputted thereto, and true value information (113) including true values indicating the numbers of people in normal times at the first spot at a plurality of times and true values indicating the numbers of people in emergency times at the first spot at a plurality of times;
a learning generation unit (130) that generates an emergency prediction learned model (200) that outputs the number of people in emergency times at the first spot at the certain time when the first information is inputted thereto by using the first learning data (111), the normal prediction learned model (112) and the true value information (113); and
an output unit (140) that outputs the normal prediction learned model (112) and the emergency prediction learned model (200).

2. The learning device according to claim 1, wherein in a case where the first spot is a station, the first learning data (111) includes operation information on trains traveling through the station.

3. The learning device according to claim 1 or 2, wherein the learning generation unit (130)
calculates the numbers of people at the first spot at a plurality of times as a plurality of predictive values by using the first learning data (111), or learning information (12) including the first learning data, and the normal prediction learned model (112),
calculates a plurality of errors based on the true values (113_1) indicating the numbers of people in normal times at the first spot at the plurality of times and the plurality of predictive values,
calculates a proportion of each of the plurality of errors in all the errors,
increases the number of pieces of data in emergency times included in the first learning data (111) or the learning information (12) depending on the proportion,
generates the first learning data or the learning information, in which the number of pieces of data in emergency times has been increased, as new learning data (10), and
generates the emergency prediction learned model (200) by using the true values (113_2) indicating the numbers of people in emergency times at the first spot at the plurality of times and the new learning data (10).

4. The learning device according to claim 3, wherein
the learning generation unit (130)
calculates the number of people at the first spot at a certain time by using data in normal times included in the first learning data (111) or the learning information (12) and the normal prediction learned model (112),
calculates an error between the true value (113_1) indicating the number of people in normal times at the first spot and the calculated number of people, and
relearns the normal prediction learned model (112) when the calculated error is included in a predetermined range, and
the output unit (140) outputs the relearned normal prediction learned model (112) and the emergency prediction learned model (200).

5. The learning device according to claim 1 or 2, wherein the learning generation unit (130)
identifies data in emergency times out of the first learning data (111) by using the first learning data (111), the normal prediction learned model (112), and the true values (113_1) indicating the numbers of people in normal times at the first spot at the plurality of times,
generates the identified data in emergency times as new learning data (21), and
generates the emergency prediction learned model (200) by using the new learning data (21) and the true values (113_2) indicating the numbers of people in emergency times at the first spot at the plurality of times.

6. The learning device according to claim 1, wherein the learning generation unit (130) generates a first judgment learned model (220) that outputs information indicating whether the first information is data in normal times or data in emergency times when the first information is inputted thereto or a first judgment learned model (220) that outputs a probability that the first information is data in normal times and a probability that the first information is data in emergency times when the first information is inputted thereto by using the first learning data (111).

7. The learning device according to claim 1, wherein
in a case where the first spot is a station, the first learning data (111) includes operation information on trains traveling through the station, and
the learning generation unit (130) generates a first judgment learned model (220) that outputs information indicating whether information including the first information and the operation information is data in normal times or data in emergency times when the first information and the operation information are inputted thereto or a first judgment learned model (220) that outputs a probability that the information including the first information and the operation information is data in normal times and a probability that the information including the first information and the operation information is data in emergency times when the first information and the operation information are inputted thereto by using the first learning data (111).

8. The learning device according to claim 1, wherein
the acquisition unit (120) acquires second learning data (114) as information indicating at least one of the congestion information and the weather at a spot other than the first spot at a plurality of times, and
the learning generation unit (130) generates a second judgment learned model (230) that outputs information indicating whether second information indicating at least one of the congestion information and the weather at a spot other than the first spot at a certain time is data in normal times or data in emergency times when the second information is inputted thereto or a second judgment learned model (230) that outputs a probability that the second information is data in normal times and a probability that the second information is data in emergency times when the second information is inputted thereto by using the second learning data (114).

9. A prediction device (300) comprising:
an acquisition unit (320) that acquires real data (311) as information indicating at least one of weather at a first spot at a certain time and congestion information as information regarding congestion, a normal prediction learned model (112), an emergency prediction learned model (200), and a first judgment learned model (220);
a normal prediction unit (330) that predicts a number of people in normal times at the first spot at the certain time by using the real data (311) and the normal prediction learned model (112);
an emergency prediction unit (340) that predicts the number of people in emergency times at the first spot at the certain time by using the real data (311) and the emergency prediction learned model (200);
a judgment unit (350) that judges whether the real data (311) is data in normal times or data in emergency times by using the real data (311) and the first judgment learned model (220);
a calculation unit (360) that calculates the number of people at the first spot at the certain time by using a normal prediction result (331) indicating the number of people in normal times, an emergency prediction result (341) indicating the number of people in emergency times, and a judgment result (351) as a result of the judgment; and
an output unit (370) that outputs a result (500) of the calculation,
wherein the normal prediction learned model (112) and the emergency prediction learned model (200) are generated by the learning device (100) according to any one of claims 1 to 8 and the first judgment learned model (220) is generated by the learning device according to claim 6 or 7.

10. The prediction device according to claim 9, wherein
the acquisition unit (320) acquires covariate distribution information (210) including a normal-time covariate distribution and an emergency-time covariate distribution, and
the judgment unit (350) judges whether the real data (311) is data in normal times or data in emergency times by using the real data (311), the covariate distribution information (210) and the first judgment learned model (220).

11. The prediction device according to claim 9, wherein the judgment unit (350) judges a probability that the real data (311) is data in normal times and a probability that the real data (311) is data in emergency times by using the real data (311) and the first judgment learned model (220).

12. The prediction device according to claim 11, wherein
the acquisition unit (320) acquires covariate distribution information (210) including a normal-time covariate distribution and an emergency-time covariate distribution, and
the judgment unit (350) judges the probability that the real data (311) is data in normal times and the probability that the real data (311) is data in emergency times by using the real data (311), the covariate distribution information (210) and the first judgment learned model (220).

13. The prediction device according to any one of claims 9 to 12, wherein in a case where the first spot is a station, the real data (311) includes operation information on trains traveling through the station.

14. A prediction device (300) comprising:
an acquisition unit (320) that acquires real data (311) as information indicating at least one of weather at a first spot at a certain time and congestion information as information regarding congestion, a normal prediction learned model (112), an emergency prediction learned model (200), and a second judgment learned model (230) that outputs information indicating whether input information is data in normal times or data in emergency times when information indicating at least one of the congestion information and the weather at a spot other than the first spot at the certain time is inputted thereto;
a normal prediction unit (330) that predicts a number of people in normal times at the first spot at the certain time by using the real data (311) and the normal prediction learned model (112);
an emergency prediction unit (340) that predicts the number of people in emergency times at the first spot at the certain time by using the real data (311) and the emergency prediction learned model (200);
a judgment unit (350) that judges whether the real data (311) is data in normal times or data in emergency times by using the real data (311) and the second judgment learned model (230);
a calculation unit (360) that calculates the number of people at the first spot at the certain time by using a normal prediction result (331) indicating the number of people in normal times, an emergency prediction result (341) indicating the number of people in emergency times, and a judgment result (352) as a result of the judgment; and
an output unit (370) that outputs a result (500) of the calculation,
wherein the normal prediction learned model (112) and the emergency prediction learned model (200) are generated by the learning device (100) according to any one of claims 1 to 8 and the second judgment learned model (230) is generated by the learning device according to claim 8.

15. The prediction device according to claim 14, wherein
the acquisition unit (320) acquires covariate distribution information (210) including a normal-time covariate distribution and an emergency-time covariate distribution, and
the judgment unit (350) judges whether the real data (311) is data in normal times or data in emergency times by using the real data (311), the covariate distribution information (210) and the second judgment learned model (230).

16. The prediction device according to claim 14, wherein
the second judgment learned model (230) is a learned model that outputs a probability that the input information is data in normal times and a probability that the input information is data in emergency times when the information indicating at least one of the congestion information and the weather at a spot other than the first spot at the certain time is inputted thereto, and
the judgment unit (350) judges a probability that the real data (311) is data in normal times and a probability that the real data (311) is data in emergency times by using the real data (311) and the second judgment learned model (230).

17. The prediction device according to claim 14, wherein
the acquisition unit (320) acquires covariate distribution information (210) including a normal-time covariate distribution and an emergency-time covariate distribution, and
the judgment unit (350) judges a probability that the real data (311) is data in normal times and a probability that the real data (311) is data in emergency times by using the real data (311), the covariate distribution information (210) and the second judgment learned model (230).

18. A prediction system comprising:
a server (400) that stores real data (311) as information indicating at least one of weather at a first spot at a certain time and congestion information as information regarding congestion, a normal prediction learned model (112), an emergency prediction learned model (200), and a first judgment learned model (220); and
a prediction device (300),
wherein the prediction device (300) includes:
an acquisition unit (320) that acquires the real data (311), the normal prediction learned model (112), the emergency prediction learned model (200) and the first judgment learned model (220) from the server (400);
a normal prediction unit (330) that predicts a number of people in normal times at the first spot at the certain time by using the real data (311) and the normal prediction learned model (112);
an emergency prediction unit (340) that predicts the number of people in emergency times at the first spot at the certain time by using the real data (311) and the emergency prediction learned model (200);
a judgment unit (350) that judges whether the real data (311) is data in normal times or data in emergency times by using the real data (311) and the first judgment learned model (220);
a calculation unit (360) that calculates the number of people at the first spot at the certain time by using a normal prediction result (331) indicating the number of people in normal times, an emergency prediction result (341) indicating the number of people in emergency times, and a judgment result (351) as a result of the judgment; and
an output unit (370) that outputs a result (500) of the calculation,
wherein the normal prediction learned model (112) and the emergency prediction learned model (200) are generated by the learning device (100) according to any one of claims 1 to 8, the first judgment learned model (220) is generated by the learning device according to claim 6 or 7, and the prediction device is the prediction device according to any one of claims 9 to 13.

19. A prediction system comprising:
a server (400) that stores real data (311) as information indicating at least one of weather at a first spot at a certain time and congestion information as information regarding congestion, a normal prediction learned model (112), an emergency prediction learned model (200), and a second judgment learned model (230) that outputs information indicating whether input information is data in normal times or data in emergency times when information indicating at least one of the congestion information and the weather at a spot other than the first spot at the certain time is inputted thereto; and
a prediction device (300),
wherein the prediction device (300) includes:
an acquisition unit (320) that acquires the real data (311), the normal prediction learned model (112), the emergency prediction learned model (200) and the second judgment learned model (230) from the server (400);
a normal prediction unit (330) that predicts a number of people in normal times at the first spot at the certain time by using the real data (311) and the normal prediction learned model (112);
an emergency prediction unit (340) that predicts the number of people in emergency times at the first spot at the certain time by using the real data (311) and the emergency prediction learned model (200);
a judgment unit (350) that judges whether the real data (311) is data in normal times or data in emergency times by using the real data (311) and the second judgment learned model (230);
a calculation unit (360) that calculates the number of people at the first spot at the certain time by using a normal prediction result (331) indicating the number of people in normal times, an emergency prediction result (341) indicating the number of people in emergency times, and a judgment result (351) as a result of the judgment; and
an output unit (370) that outputs a result (500) of the calculation,
wherein the normal prediction learned model (112) and the emergency prediction learned model (200) are generated by the learning device (100) according to any one of claims 1 to 8, the second judgment learned model (230) is generated by the learning device according to claim 8, and the prediction device is the prediction device according to any one of claims 14 to 17.

20. A learning method performed by the learning device (100) according to any one of claims 1 to 8, the learning method comprising:
acquiring first learning data (111) as information indicating at least one of weather at a first spot at a plurality of times and congestion information as information regarding congestion, a normal prediction learned model (112) that outputs a number of people in normal times at the first spot at a certain time when first information indicating at least one of the congestion information and the weather at the first spot at the certain time is inputted thereto, and true value information (113) including true values indicating the numbers of people in normal times at the first spot at a plurality of times and true values indicating the numbers of people in emergency times at the first spot at a plurality of times;
generating an emergency prediction learned model (200) that outputs the number of people in emergency times at the first spot at the certain time when the first information is inputted thereto by using the first learning data (111), the normal prediction learned model (112) and the true value information (113); and
outputting the normal prediction learned model (112) and the emergency prediction learned model (200).

21. A prediction method performed by the prediction device (300) according to any one of claims 9 to 13, the prediction method comprising:
acquiring real data (311) as information indicating at least one of weather at a first spot at a certain time and congestion information as information regarding congestion, a normal prediction learned model (112), an emergency prediction learned model (200), and a first judgment learned model (220);
predicting a number of people in normal times at the first spot at the certain time by using the real data (311) and the normal prediction learned model (112), predicting the number of people in emergency times at the first spot at the certain time by using the real data (311) and the emergency prediction learned model (200), and judging whether the real data (311) is data in normal times or data in emergency times by using the real data (311) and the first judgment learned model (220);
calculating the number of people at the first spot at the certain time by using a normal prediction result (331) indicating the number of people in normal times, an emergency prediction result (341) indicating the number of people in emergency times, and a judgment result (351) as a result of the judgment; and
outputting a result (500) of the calculation.

22. A prediction method performed by the prediction device (300) according to any one of claims 14 to 17, the prediction method comprising:
acquiring real data (311) as information indicating at least one of weather at a first spot at a certain time and congestion information as information regarding congestion, a normal prediction learned model (112), an emergency prediction learned model (200), and a second judgment learned model (230) that outputs information indicating whether input information is data in normal times or data in emergency times when information indicating at least one of the congestion information and the weather at a spot other than the first spot at the certain time is inputted thereto;
predicting a number of people in normal times at the first spot at the certain time by using the real data (311) and the normal prediction learned model (112), predicting the number of people in emergency times at the first spot at the certain time by using the real data (311) and the emergency prediction learned model (200), and judging whether the real data (311) is data in normal times or data in emergency times by using the real data (311) and the second judgment learned model (230);
calculating the number of people at the first spot at the certain time by using a normal prediction result (331) indicating the number of people in normal times, an emergency prediction result (341) indicating the number of people in emergency times, and a judgment result (351) as a result of the judgment; and
outputting a result (500) of the calculation.

## Patentansprüche

1. Lerneinrichtung (100), umfassend:
eine Erwerbungseinheit (120), die erste Lerndaten (111) als Informationen, die zumindest eines von Wetter an einem ersten Ort zu einer Vielzahl von Zeitpunkten und Verkehrsaufkommensinformationen als Informationen bezüglich eines Verkehrsaufkommens anzeigen, ein erlerntes Normalfall-Prognosemodell (112), das eine Personenzahl zu Normalfallzeiten an dem ersten Ort zu einem bestimmten Zeitpunkt ausgibt, wenn erste Informationen, die zumindest eines von den Verkehrsaufkommensinformationen und dem Wetter an dem ersten Ort zu dem bestimmten Zeitpunkt anzeigen, in dieses eingegeben werden, und Wahrer-Wert-Informationen (113), die wahre Werte enthalten, welche die Personenzahl zu Normalfallzeiten an dem ersten Ort zu einer Vielzahl von Zeitpunkten sowie wahre Werte, welche die Personenzahlen zu Störfallzeiten an dem ersten Ort zu einer Vielzahl von Zeitpunkten anzeigen, erwirbt;
eine Lern-Generierungseinheit (130), die ein erlerntes Störfall-Prognosemodell (200), das die Personenzahl zu Störfallzeiten an dem ersten Ort zu einem bestimmten Zeitpunkt ausgibt, wenn die ersten Informationen in dieses eingegeben werden, unter Verwendung der ersten Lerndaten (111), des erlernten Normalfall-Prognosemodells (112) und der Wahrer-Wert-Informationen (113) generiert; und
eine Ausgabeeinheit (140), die das erlernte Normalfall-Prognosemodell (112) und das erlernte Störfall-Prognosemodell (200) ausgibt.

2. Lerneinrichtung nach Anspruch 1, wobei in einem Fall, in dem der erste Ort ein Bahnhof ist, die ersten Lerndaten (111) Betriebsinformationen zu Zügen enthalten, die diesen Bahnhof durchfahren.

3. Lerneinrichtung nach Anspruch 1 oder 2, wobei die Lern-Generierungseinheit (130)
die Personenzahl an dem ersten Ort zu einer Vielzahl von Zeitpunkten als eine Vielzahl von Prognosewerten unter Verwendung der ersten Lerndaten (111) oder Lerninformationen (12) welche die ersten Lerndaten enthalten, sowie des erlernten Normalfall-Prognosemodells (112) berechnet,
eine Vielzahl von Fehlern auf der Grundlage der wahren Werte (113_1), welche die Personenzahlen zu Normalfallzeiten an dem ersten Ort zu der Vielzahl von Zeitpunkten anzeigen, sowie der Vielzahl von Prognosewerten berechnet,
einen Anteil jedes einzelnen der Vielzahl von Fehlern an der Gesamtheit der Fehler berechnet,
die Anzahl an Datenstücken, die in den ersten Lerndaten (111) oder den Lerninformationen (12) enthalten sind, zu Störfallzeiten in Abhängigkeit von dem Anteil erhöht,
die ersten Lerndaten oder die Lerninformationen, bei denen die Anzahl an Datenstücken in Störfallzeiten erhöht wurde, als neue Lerndaten (10) generiert, und
das erlernte Störfall-Prognosemodell (200) unter Verwendung der wahren Werte (113_2), welche die Personenzahlen zu Störfallzeiten an dem ersten Ort zu der Vielzahl von Zeitpunkten anzeigen, sowie der neuen Lerndaten (10) generiert.

4. Lerneinrichtung nach Anspruch 3, wobei
die Lern-Generierungseinheit (130)
die Personenzahl an dem ersten Ort zu einem bestimmten Zeitpunkt unter Verwendung von Daten zu Normalfallzeiten, die in den ersten Lerndaten (111) oder den Lerninformationen (12) enthalten sind, sowie des erlernten Normalfall-Prognosemodells (112) berechnet,
einen Fehler zwischen dem wahren Wert (113_1), welcher die Personenzahl zu Normalfallzeiten an dem ersten Ort anzeigt, und der berechneten Personenzahl berechnet, und
das erlernte Normalfall-Prognosemodell (112) neu lernt, wenn der berechnete Fehler innerhalb eines vorherbestimmten Bereichs liegt, und
die Ausgabeeinheit (140) das neu erlernte Normalfall-Prognosemodell (112) und das erlernte Störfall-Prognosemodell (200) ausgibt.

5. Lerneinrichtung nach Anspruch 1 oder 2, wobei die Lern-Generierungseinheit (130)
Daten zu Störfallzeiten aus den ersten Lerndaten (111) unter Verwendung der ersten Lerndaten (111), des erlernten Normalfall-Prognosemodells (112) und der wahren Werte (113_1), welche die Personenzahlen zu Normalfallzeiten an dem ersten Ort zu der Vielzahl von Zeitpunkten anzeigen, identifiziert,
die identifizierten Daten zu Störfallzeiten als neue Lerndaten (21) generiert, und
das erlernte Störfall-Prognosemodell (200) unter Verwendung der neuen Lerndaten (21) und der wahren Werte (113_2), welche die Personenzahl zu Störfallzeiten an dem ersten Ort zu der Vielzahl von Zeitpunkten anzeigen, generiert.

6. Lerneinrichtung nach Anspruch 1, wobei die Lern-Generierungseinheit (130) ein erstes erlerntes Beurteilungsmodell (220), das Informationen ausgibt, die anzeigen, ob die ersten Informationen Daten zu Normalfallzeiten oder Daten zu Störfallzeiten sind, wenn die ersten Informationen in dieses eingegeben werden, oder ein erstes erlerntes Beurteilungsmodell (220), das eine Wahrscheinlichkeit dafür, dass die ersten Informationen Daten zu Normalfallzeiten sind, sowie eine Wahrscheinlichkeit dafür, dass die ersten Informationen Daten zu Störfallzeiten sind, ausgibt, wenn die ersten Informationen in dieses eingegeben werden, unter Verwendung der ersten Lerndaten (111) generiert.

7. Lerneinrichtung nach Anspruch 1, wobei
in einem Fall, in dem der erste Ort ein Bahnhof ist, die ersten Lerndaten (111) Betriebsinformationen zu Zügen enthalten, die diesen Bahnhof durchfahren, und
die Lern-Generierungseinheit (130) ein erstes erlerntes Beurteilungsmodell (220), das Informationen ausgibt, die anzeigen, ob Informationen, welche die ersten Informationen und die Betriebsinformationen enthalten, Daten zu Normalfallzeiten oder Daten zu Störfallzeiten sind, wenn die ersten Informationen und die Betriebsinformationen in dieses eingegeben werden, oder ein erstes erlerntes Beurteilungsmodell (220), das eine Wahrscheinlichkeit dafür, dass die Informationen, welche die ersten Informationen und die Betriebsinformationen enthalten, Daten zu Normalfallzeiten sind, sowie eine Wahrscheinlichkeit dafür, dass die Informationen, welche die ersten Informationen und die Betriebsinformationen enthalten, Daten zu Notfallzeiten sind, ausgibt, wenn die ersten Informationen und die Betriebsinformationen in dieses eingegeben werden, unter Verwendung der ersten Lerndaten (111) generiert.

8. Lerneinrichtung nach Anspruch 1, wobei
die Erwerbungseinheit (120), zweite Lerndaten (114) als Informationen erwirbt, die zumindest eines der Verkehrsaufkommensinformationen und dem Wetter an einem anderen Ort als dem ersten Ort zu einer Vielzahl von Zeitpunkten anzeigen, erwirbt, und
die Lern-Generierungseinheit (130) ein zweites erlerntes Beurteilungsmodell (230), das Informationen ausgibt, die anzeigen, ob zweite Informationen, die zumindest eines von den Verkehrsaufkommensinformationen und dem Wetter an einem anderen Ort als dem ersten Ort zu einem bestimmten Zeitpunkt anzeigen, Daten zu Normalfallzeiten oder Daten zu Störfallzeiten sind, wenn die zweiten Informationen in dieses eingegeben werden, oder ein zweites erlerntes Beurteilungsmodell (230), das eine Wahrscheinlichkeit dafür, dass die zweiten Informationen Daten zu Normalfallzeiten sind, sowie eine Wahrscheinlichkeit dafür, dass die zweiten Informationen Daten zu Störfallzeiten sind, ausgibt, wenn die zweiten Informationen in dieses eingegeben werden, unter Verwendung der zweiten Lerndaten (114) generiert.

9. Prognoseeinrichtung (300), umfassend:
eine Erwerbungseinheit (320), die reale Daten (311) als Informationen, die zumindest eines von Wetter an einem ersten Ort zu einem bestimmten Zeitpunkt und Verkehrsaufkommensinformationen als Informationen bezüglich einem Verkehrsaufkommen anzeigen, ein erlerntes Normalfall-Prognosemodell (112), ein erlerntes Störfall-Prognosemodell (200) und ein erstes erlerntes Beurteilungsmodell (220) erwirbt;
eine Normalfall-Prognoseeinheit (330), die unter Verwendung der realen Daten (311) und des erlernten Normalfall-Prognosemodells (112) eine Personenzahl zu Normalfallzeiten an dem ersten Ort zu dem bestimmten Zeitpunkt prognostiziert;
eine Störfall-Prognoseeinheit (340), die unter Verwendung der realen Daten (311) und des erlernten Störfall-Prognosemodells (200) die Personenzahl zu Störfallzeiten an dem ersten Ort zu dem bestimmten Zeitpunkt prognostiziert;
eine Beurteilungseinheit (350), die unter Verwendung der realen Daten (311) und des ersten erlernten Beurteilungsmodells (220) beurteilt, ob die realen Daten (311) Daten zu Normalfallzeiten oder Daten zu Störfallzeiten sind;
eine Berechnungseinheit (360), welche die Personenzahl an dem ersten Ort zu dem bestimmten Zeitpunkt unter Verwendung eines Normalfall-Prognoseergebnisses (331), das die Personenzahl zu Normalfallzeiten anzeigt, eines Störfall-Prognoseergebnisses (341), das die Personenzahl zu Störfallzeiten anzeigt, sowie eines Beurteilungsergebnisses (351) als ein Ergebnis der Beurteilung berechnet; und
eine Ausgabeeinheit (370), die ein Ergebnis (500) der Berechnung ausgibt,
wobei das erlernte Normalfall-Prognosemodell (112) und das erlernte Störfall-Prognosemodell (200) von der Lerneinrichtung (100) gemäß einem der Ansprüche 1 bis 8 generiert werden, und das erste erlernte Beurteilungsmodell (220) von der Lerneinrichtung gemäß Anspruch 6 oder 7 generiert wird.

10. Prognoseeinrichtung nach Anspruch 9, wobei
die Erwerbungseinheit (320) Kovariaten-Verteilungsinformationen (210), einschließlich einer Normalfallzeit-Kovariatenverteilung und einer Störfallzeit-Kovariatenverteilung erwirbt, und
die Beurteilungseinheit (350) unter Verwendung der realen Daten (311), der Kovariaten-Verteilungsinformationen (210) und des ersten erlernten Beurteilungsmodells (220) beurteilt, ob die realen Daten (311) Daten zu Normalfallzeiten oder Daten zu Störfallzeiten sind.

11. Prognoseeinrichtung nach Anspruch 9, wobei die Beurteilungseinheit (350) unter Verwendung der realen Daten (311) und des ersten erlernten Beurteilungsmodells (220) eine Wahrscheinlichkeit dafür, dass die realen Daten (311) Daten zu Normalfallzeiten sind, sowie eine Wahrscheinlichkeit dafür, dass die realen Daten (311) Daten zu Störfallzeiten sind, beurteilt.

12. Prognoseeinrichtung nach Anspruch 11, wobei
die Erwerbungseinheit (320) Kovariaten-Verteilungsinformationen (210), einschließlich einer Normalfallzeit-Kovariatenverteilung und einer Störfallzeit-Kovariatenverteilung erwirbt, und
die Beurteilungseinheit (350) unter Verwendung der realen Daten (311), der Kovariaten-Verteilungsinformationen (210) und des ersten erlernten Beurteilungsmodells (220) die Wahrscheinlichkeit dafür, dass die realen Daten (311) Daten zu Normalfallzeiten sind, sowie die Wahrscheinlichkeit dafür, dass die realen Daten (311) Daten zu Störfallzeiten sind, beurteilt.

13. Prognoseeinrichtung nach einem der Ansprüche 9 bis 12, wobei in einem Fall, in dem der erste Ort ein Bahnhof ist, die realen Daten (311) Betriebsinformationen zu Zügen enthalten, die diesen Bahnhof durchfahren.

14. Prognoseeinrichtung (300), umfassend:
eine Erwerbungseinheit (320), die reale Daten (311) als Informationen, die zumindest eines von Wetter an einem ersten Ort zu einem bestimmten Zeitpunkt und Verkehrsaufkommensinformationen als Informationen bezüglich einem Verkehrsaufkommen anzeigen, ein erlerntes Normalfall-Prognosemodell (112), ein erlerntes Störfall-Prognosemodell (200) und ein zweites erlerntes Beurteilungsmodell (230), das Informationen ausgibt, welche anzeigen, ob Eingabeinformationen Daten zu Normalfallzeiten oder Daten zu Störfallzeiten sind, wenn Informationen, welche zumindest eines von den Verkehrsaufkommensinformationen und dem Wetter an einem anderen Ort als dem ersten Ort zu dem bestimmten Zeitpunkt anzeigen, in dieses eingegeben werden, erwirbt;
eine Normalfall-Prognoseeinheit (330), die unter Verwendung der realen Daten (311) und des erlernten Normalfall-Prognosemodells (112) eine Personenzahl zu Normalfallzeiten an dem ersten Ort zu dem bestimmten Zeitpunkt prognostiziert;
eine Störfall-Prognoseeinheit (340), die unter Verwendung der realen Daten (311) und des erlernten Störfall-Prognosemodells (200) die Personenzahl zu Störfallzeiten an dem ersten Ort zu dem bestimmten Zeitpunkt prognostiziert;
eine Beurteilungseinheit (350), die unter Verwendung der realen Daten (311) und des zweiten erlernten Beurteilungsmodells (230) beurteilt, ob die realen Daten (311) Daten zu Normalfallzeiten oder Daten zu Störfallzeiten sind;
eine Berechnungseinheit (360), welche die Personenzahl an dem ersten Ort zu dem bestimmten Zeitpunkt unter Verwendung eines Normalfall-Prognoseergebnisses (331), das die Personenzahl zu Normalfallzeiten anzeigt, eines Störfall-Prognoseergebnisses (341), das die Personenzahl zu Störfallzeiten anzeigt, sowie eines Beurteilungsergebnisses (352) als ein Ergebnis der Beurteilung berechnet; und
eine Ausgabeeinheit (370), die ein Ergebnis (500) der Berechnung ausgibt,
wobei das erlernte Normalfall-Prognosemodell (112) und das erlernte Störfall-Prognosemodell (200) von der Lerneinrichtung (100) gemäß einem der Ansprüche 1 bis 8 generiert werden, und das zweite erlernte Beurteilungsmodell (230) von der Lerneinrichtung gemäß Anspruch 8 generiert wird.

15. Prognoseeinrichtung nach Anspruch 14, wobei
die Erwerbungseinheit (320) Kovariaten-Verteilungsinformationen (210), einschließlich einer Normalfallzeit-Kovariatenverteilung und einer Störfallzeit-Kovariatenverteilung erwirbt, und
die Beurteilungseinheit (350) unter Verwendung der realen Daten (311), der Kovariaten-Verteilungsinformationen (210) und des zweiten erlernten Beurteilungsmodells (230) beurteilt, ob die realen Daten (311) Daten zu Normalfallzeiten oder Daten zu Störfallzeiten sind.

16. Prognoseeinrichtung nach Anspruch 14, wobei
das zweite erlernte Beurteilungsmodell (230) ein erlerntes Modell ist, das eine Wahrscheinlichkeit dafür, dass die Eingabeinformationen Daten zu Normalfallzeiten sind, sowie eine Wahrscheinlichkeit dafür, dass die Eingabeinformationen Daten zu Störfallzeiten sind, ausgibt, wenn die Informationen, welche zumindest eines von den Verkehrsaufkommensinformationen und dem Wetter an einem anderen Ort als dem ersten Ort zu dem bestimmten Zeitpunkt anzeigen, in diese eingegeben werden, und
die Beurteilungseinheit (350) unter Verwendung der realen Daten (311) und des zweiten erlernten Beurteilungsmodells (230) eine Wahrscheinlichkeit dafür, dass die realen Daten (311) Daten zu Normalfallzeiten sind, und eine Wahrscheinlichkeit dafür, dass die realen Daten (311) Daten zu Störfallzeiten sind, beurteilt.

17. Prognoseeinrichtung nach Anspruch 14, wobei
die Erwerbungseinheit (320) Kovariaten-Verteilungsinformationen (210), einschließlich einer Normalfallzeit-Kovariatenverteilung und einer Störfallzeit-Kovariatenverteilung erwirbt, und
die Beurteilungseinheit (350) unter Verwendung der realen Daten (311), der Kovariaten-Verteilungsinformationen (210) und des zweiten erlernten Beurteilungsmodells (230) eine Wahrscheinlichkeit dafür, dass die realen Daten (311) Daten zu Normalfallzeiten sind, und eine Wahrscheinlichkeit dafür, dass die realen Daten (311) Daten zu Störfallzeiten sind, beurteilt.

18. Prognosesystem, umfassend:
einen Server (400), der reale Daten (311) als Informationen speichert, die zumindest eines von Wetter an einem ersten Ort zu einem bestimmten Zeitpunkt und Verkehrsaufkommensinformationen als Informationen bezüglich einem Verkehrsaufkommen anzeigen, ein erlerntes Normalfall-Prognosemodell (112), ein erlerntes Störfall-Prognosemodell (200) und ein erstes erlerntes Beurteilungsmodell (220) speichert; und
eine Prognoseeinrichtung (300),
wobei die Prognoseeinrichtung (300) aufweist:
eine Erwerbungseinheit (320), welche die realen Daten (311), das erlernte Normalfall-Prognosemodell (112), das erlernte Störfall-Prognosemodell (200) und das erlernte erste Beurteilungsmodell (220) vom Server (400) erwirbt;
eine Normalfall-Prognoseeinheit (330), die unter Verwendung der realen Daten (311) und des erlernten Normalfall-Prognosemodells (112) eine Personenzahl zu Normalfallzeiten an dem ersten Ort zu dem bestimmten Zeitpunkt prognostiziert;
eine Störfall-Prognoseeinheit (340), die unter Verwendung der realen Daten (311) und des erlernten Störfall-Prognosemodells (200) die Personenzahl zu Störfallzeiten an dem ersten Ort zu dem bestimmten Zeitpunkt prognostiziert;
eine Beurteilungseinheit (350), die unter Verwendung der realen Daten (311) und des ersten erlernten Beurteilungsmodells (220) beurteilt, ob die realen Daten (311) Daten zu Normalfallzeiten oder Daten zu Störfallzeiten sind;
eine Berechnungseinheit (360), welche die Personenzahl an dem ersten Ort zu dem bestimmten Zeitpunkt unter Verwendung eines Normalfall-Prognoseergebnisses (331), das die Personenzahl zu Normalfallzeiten anzeigt, eines Störfall-Prognoseergebnisses (341), das die Personenzahl zu Störfallzeiten anzeigt, sowie eines Beurteilungsergebnisses (351) als ein Ergebnis der Beurteilung berechnet; und
eine Ausgabeeinheit (370), die ein Ergebnis (500) der Berechnung ausgibt,
wobei das erlernte Normalfall-Prognosemodell (112) und das erlernte Störfall-Prognosemodell (200) von der Lerneinrichtung (100) gemäß einem der Ansprüche 1 bis 8 generiert werden, das erste erlernte Beurteilungsmodell (220) von der Lerneinrichtung gemäß Anspruch 6 oder 7 generiert wird, und die Prognoseeinrichtung die Prognoseeinrichtung nach einem der Ansprüche 9 bis 13 ist.

19. Prognosesystem, umfassend:
einen Server (400), der reale Daten (311) als Informationen, die zumindest eines von Wetter an einem ersten Ort zu einem bestimmten Zeitpunkt und Verkehrsaufkommensinformationen als Informationen bezüglich einem Verkehrsaufkommen anzeigen, ein erlerntes Normalfall-Prognosemodell (112), ein erlerntes Störfall-Prognosemodell (200) sowie ein erlerntes zweites Beurteilungsmodell (230), das Informationen ausgibt, die anzeigen, ob die Eingabeinformationen Daten zu Normalfallzeiten oder Daten zu Störfallzeiten sind, wenn Informationen, die zumindest eines von den Verkehrsaufkommensinformationen und dem Wetter an einem anderen Ort als dem ersten Ort zu dem bestimmten Zeitpunkt anzeigen, in dieses eingegeben werden, speichert; und
eine Prognoseeinrichtung (300),
wobei die Prognoseeinrichtung (300) aufweist:
eine Erwerbungseinheit (320), welche die realen Daten (311), das erlernte Normalfall-Prognosemodell (112), das erlernte Störfall-Prognosemodell (200) und das erlernte zweite Beurteilungsmodell (230) vom Server (400) erwirbt;
eine Normalfall-Prognoseeinheit (330), die unter Verwendung der realen Daten (311) und des erlernten Normalfall-Prognosemodells (112) eine Personenzahl zu Normalfallzeiten an dem ersten Ort zu dem bestimmten Zeitpunkt prognostiziert;
eine Störfall-Prognoseeinheit (340), die unter Verwendung der realen Daten (311) und des erlernten Störfall-Prognosemodells (200) die Personenzahl zu Störfallzeiten an dem ersten Ort zu dem bestimmten Zeitpunkt prognostiziert;
eine Beurteilungseinheit (350), die unter Verwendung der realen Daten (311) und des zweiten erlernten Beurteilungsmodells (230) beurteilt, ob die realen Daten (311) Daten zu Normalfallzeiten oder Daten zu Störfallzeiten sind;
eine Berechnungseinheit (360), welche die Personenzahl an dem ersten Ort zu dem bestimmten Zeitpunkt unter Verwendung eines Normalfall-Prognoseergebnisses (331), das die Personenzahl zu Normalfallzeiten anzeigt, eines Störfall-Prognoseergebnisses (341), das die Personenzahl zu Störfallzeiten anzeigt, sowie eines Beurteilungsergebnisses (351) als ein Ergebnis der Beurteilung berechnet; und
eine Ausgabeeinheit (370), die ein Ergebnis (500) der Berechnung ausgibt,
wobei das erlernte Normalfall-Prognosemodell (112) und das erlernte Störfall-Prognosemodell (200) von der Lerneinrichtung (100) gemäß einem der Ansprüche 1 bis 8 generiert werden, das zweite erlernte Beurteilungsmodell (230) von der Lerneinrichtung gemäß Anspruch 8 generiert wird, und die Prognoseeinrichtung die Prognoseeinrichtung nach einem der Ansprüche 14 bis 17 ist.

20. Lernverfahren, das von der Lerneinrichtung (100) gemäß einem der Ansprüche 1 bis 8 durchgeführt wird, wobei das Lernverfahren umfasst:
Erwerben erster Lerndaten (111) als Informationen, welche zumindest eines von Wetter an einem ersten Ort zu einer Vielzahl von Zeitpunkten und Verkehrsaufkommensinformationen als Informationen bezüglich eines Verkehrsaufkommens anzeigen, eines erlernten Normalfall-Prognosemodells (112), das eine Personenzahl zu Normalfallzeiten an dem ersten Ort zu einem bestimmten Zeitpunkt ausgibt, wenn erste Informationen, die zumindest eines von den Verkehrsaufkommensinformationen und dem Wetter an dem ersten Ort zu dem bestimmten Zeitpunkt anzeigen, in dieses eingegeben werden, und Wahrer-Wert-Informationen (113), die wahre Werte enthalten, welche die Personenzahl zu Normalfallzeiten an dem ersten Ort zu einer Vielzahl von Zeitpunkten anzeigen, sowie wahre Werte, welche die Personenzahl zu Störfallzeiten an dem ersten Ort zu einer Vielzahl von Zeitpunkten anzeigen;
Generieren eines erlernten Störfall-Prognosemodells (200), das die Personenzahl zu Störfallzeiten an dem ersten Ort zu dem bestimmten Zeitpunkt ausgibt, wenn die ersten Informationen unter Verwendung der ersten Lerndaten (111), des erlernten Normalfall-Prognosemodells (112) und der Wahrer-Wert-Informationen (113) in dieses eingegeben werden; und
Ausgeben des erlernten Normalfall-Prognosemodells (112) und des erlernten Störfall-Prognosemodells (200).

21. Prognoseverfahren, das von der Prognoseeinrichtung (300) gemäß einem der Ansprüche 9 bis 13 durchgeführt wird, wobei das Prognoseverfahren umfasst:
Erwerben realer Daten (311) als Informationen, die zumindest eines von Wetter an einem ersten Ort zu einem bestimmten Zeitpunkt und Verkehrsaufkommensinformationen als Informationen bezüglich eines Verkehrsaufkommens anzeigen, eines erlernten Normalfall-Prognosemodells (112), eines erlernten Störfall-Prognosemodells (200) und eines ersten erlernten Beurteilungsmodells (220);
Prognostizieren einer Personenzahl zu Normalfallzeiten an dem ersten Ort zu dem bestimmten Zeitpunkt unter Verwendung der realen Daten (311) und des erlernten Normalfall-Prognosemodells (112), Prognostizieren der Personenzahl zu Störfallzeiten an dem ersten Ort zu dem bestimmten Zeitpunkt unter Verwendung der realen Daten (311) und des erlernten Störfall-Prognosemodells (200), und Beurteilen, ob die realen Daten (311) Daten zu Normalfallzeiten oder Daten zu Störfallzeiten sind, unter Verwendung der realen Daten (311) und des erlernten ersten Beurteilungsmodells (220);
Berechnen der Personenzahl an dem ersten Ort zu dem bestimmten Zeitpunkt unter Verwendung eines Normalfall-Prognoseergebnisses (331), das die Personenzahl zu Normalfallzeiten anzeigt, eines Störfall-Prognoseergebnisses (341), das die Personenzahl zu Störfallzeiten anzeigt, sowie eines Beurteilungsergebnisses (351) als ein Ergebnis der Beurteilung; und
Ausgeben eines Ergebnisses (500) der Berechnung.

22. Prognoseverfahren, das von der Prognoseeinrichtung (300) gemäß einem der Ansprüche 14 bis 17 durchgeführt wird, wobei das Prognoseverfahren umfasst:
Erwerben von realen Daten (311) als Informationen, die zumindest eines von Wetter an einem ersten Ort zu einem bestimmten Zeitpunkt und Verkehrsaufkommensinformationen als Informationen bezüglich einem Verkehrsaufkommen anzeigen, eines erlernten Normalfall-Prognosemodells (112), eines erlernten Störfall-Prognosemodells (200) sowie eines erlernten zweiten Beurteilungsmodells (230), das Informationen ausgibt, die anzeigen, ob Eingabeinformationen Daten zu Normalfallzeiten oder Daten zu Störfallzeiten sind, wenn Informationen, die zumindest eines von den Verkehrsaufkommensinformationen und dem Wetter an einem anderen Ort als dem ersten Ort zu dem bestimmten Zeitpunkt anzeigen, in dieses eingegeben werden;
Prognostizieren einer Personenzahl zu Normalfallzeiten an dem ersten Ort zu dem bestimmten Zeitpunkt unter Verwendung der realen Daten (311) und des erlernten Normalfall-Prognosemodells (112), Prognostizieren der Personenzahl zu Störfallzeiten an dem ersten Ort zu dem bestimmten Zeitpunkt (311) unter Verwendung der realen Daten und des erlernten Störfall-Prognosemodells (200) sowie Beurteilen, ob die realen Daten (311) Daten zu Normalfallzeiten oder Daten zu Störfallzeiten sind, unter Verwendung der realen Daten (311) und des erlernten zweiten Beurteilungsmodells (230);
Berechnen der Personenzahl an dem ersten Ort zu dem bestimmten Zeitpunkt unter Verwendung eines Normalfall-Prognoseergebnisses (331), das die Personenzahl zu Normalfallzeiten anzeigt, eines Störfall-Prognoseergebnisses (341), das die Personenzahl zu Störfallzeiten anzeigt, sowie eines Beurteilungsergebnisses (351) als ein Ergebnis der Beurteilung; und
Ausgeben eines Ergebnisses (500) der Berechnung.

## Revendications

1. Un dispositif d'apprentissage (100) comprenant :
une unité d'acquisition (120) qui acquiert des premières données d'apprentissage (111) en tant qu'informations indiquant au moins l'une parmi une météo à un premier emplacement à une pluralité de moments et des informations de congestion en tant qu'informations concernant une congestion, un modèle appris de prédiction normale (112) qui délivre en sortie un nombre de personnes en temps normaux au premier emplacement à un certain moment lorsque des premières informations indiquant au moins l'une parmi les informations de congestion et la météo au premier emplacement au certain moment y sont entrées, et des informations de valeur vraie (113) incluant des valeurs vraies indiquant les nombres de personnes en temps normaux au premier emplacement à une pluralité de moments et des valeurs vraies indiquant les nombres de personnes en temps d'urgence au premier emplacement à une pluralité de moments ;
une unité de génération d'apprentissage (130) qui génère un modèle appris de prédiction d'urgence (200) qui délivre en sortie le nombre de personnes en temps d'urgence au premier emplacement au certain moment lorsque les premières informations y sont entrées en utilisant les premières données d'apprentissage (111), le modèle appris de prédiction normale (112) et les informations de valeur vraie (113) ; et
une unité de sortie (140) qui délivre en sortie le modèle appris de prédiction normale (112) et le modèle appris de prédiction d'urgence (200).

2. Le dispositif d'apprentissage selon la revendication 1, dans lequel, dans un cas où le premier emplacement est une station, les premières données d'apprentissage (111) incluent des informations d'exploitation sur des trains circulant à travers la station.

3. Le dispositif d'apprentissage selon la revendication 1 ou 2, dans lequel l'unité de génération d'apprentissage (130)
calcule les nombres de personnes au premier emplacement à une pluralité de moments en tant qu'une pluralité de valeurs prédictives en utilisant les premières données d'apprentissage (111), ou des informations d'apprentissage (12) incluant les premières données d'apprentissage, et le modèle appris de prédiction normale (112),
calcule une pluralité d'erreurs sur la base des valeurs vraies (113_1) indiquant les nombres de personnes en temps normaux au premier emplacement à la pluralité de moments et de la pluralité de valeurs prédictives,
calcule une proportion de chacune de la pluralité d'erreurs dans toutes les erreurs,
augmente le nombre d'éléments de données en temps d'urgence inclus dans les premières données d'apprentissage (111) ou les informations d'apprentissage (12) en fonction de la proportion,
génère les premières données d'apprentissage ou les informations d'apprentissage, dans lesquelles le nombre d'éléments de données en temps d'urgence a été augmenté, en tant que nouvelles données d'apprentissage (10), et
génère le modèle appris de prédiction d'urgence (200) en utilisant les valeurs vraies (113_2) indiquant les nombres de personnes en temps d'urgence au premier emplacement à la pluralité de moments et les nouvelles données d'apprentissage (10).

4. Le dispositif d'apprentissage selon la revendication 3, dans lequel
l'unité de génération d'apprentissage (130)
calcule le nombre de personnes au premier emplacement à un certain moment en utilisant des données en temps normaux incluses dans les premières données d'apprentissage (111) ou les informations d'apprentissage (12) et le modèle appris de prédiction normale (112),
calcule une erreur entre la valeur vraie (113_1) indiquant le nombre de personnes en temps normaux au premier emplacement et le nombre de personnes calculé, et
réapprend le modèle appris de prédiction normale (112) lorsque l'erreur calculée est incluse dans une plage prédéterminée, et
l'unité de sortie (140) délivre en sortie le modèle appris de prédiction normale (112) réappris et le modèle appris de prédiction d'urgence (200).

5. Le dispositif d'apprentissage selon la revendication 1 ou 2, dans lequel l'unité de génération d'apprentissage (130)
identifie des données en temps d'urgence parmi les premières données d'apprentissage (111) en utilisant les premières données d'apprentissage (111), le modèle appris de prédiction normale (112), et les valeurs vraies (113_1) indiquant les nombres de personnes en temps normaux au premier emplacement à la pluralité de moments,
génère les données identifiées en temps d'urgence en tant que nouvelles données d'apprentissage (21), et
génère le modèle appris de prédiction d'urgence (200) en utilisant les nouvelles données d'apprentissage (21) et les valeurs vraies (113_2) indiquant les nombres de personnes en temps d'urgence au premier emplacement à la pluralité de moments.

6. Le dispositif d'apprentissage selon la revendication 1, dans lequel l'unité de génération d'apprentissage (130) génère un premier modèle appris de jugement (220) qui délivre en sortie des informations indiquant si les premières informations sont des données en temps normaux ou des données en temps d'urgence lorsque les premières informations y sont entrées ou un premier modèle appris de jugement (220) qui délivre en sortie une probabilité que les premières informations soient des données en temps normaux et une probabilité que les premières informations soient des données en temps d'urgence lorsque les premières informations y sont entrées en utilisant les premières données d'apprentissage (111).

7. Le dispositif d'apprentissage selon la revendication 1, dans lequel
dans un cas où le premier emplacement est une station, les premières données d'apprentissage (111) incluent des informations d'exploitation sur des trains circulant à travers la station, et
l'unité de génération d'apprentissage (130) génère un premier modèle appris de jugement (220) qui délivre en sortie des informations indiquant si des informations incluant les premières informations et les informations d'exploitation sont des données en temps normaux ou des données en temps d'urgence lorsque les premières informations et les informations d'exploitation y sont entrées ou un premier modèle appris de jugement (220) qui délivre en sortie une probabilité que les informations incluant les premières informations et les informations d'exploitation soient des données en temps normaux et une probabilité que les informations incluant les premières informations et les informations d'exploitation soient des données en temps d'urgence lorsque les premières informations et les informations d'exploitation y sont entrées en utilisant les premières données d'apprentissage (111).

8. Le dispositif d'apprentissage selon la revendication 1, dans lequel
l'unité d'acquisition (120) acquiert des secondes données d'apprentissage (114) en tant qu'informations indiquant au moins l'une parmi les informations de congestion et la météo à un emplacement autre que le premier emplacement à une pluralité de moments, et
l'unité de génération d'apprentissage (130) génère un second modèle appris de jugement (230) qui délivre en sortie des informations indiquant si des secondes informations indiquant au moins l'une parmi les informations de congestion et la météo à un emplacement autre que le premier emplacement à un certain moment sont des données en temps normaux ou des données en temps d'urgence lorsque les secondes informations y sont entrées ou un second modèle appris de jugement (230) qui délivre en sortie une probabilité que les secondes informations soient des données en temps normaux et une probabilité que les secondes informations soient des données en temps d'urgence lorsque les secondes informations y sont entrées en utilisant les secondes données d'apprentissage (114).

9. Un dispositif de prédiction (300) comprenant :
une unité d'acquisition (320) qui acquiert des données réelles (311) en tant qu'informations indiquant au moins l'une parmi une météo à un premier emplacement à un certain moment et des informations de congestion en tant qu'informations concernant une congestion, un modèle appris de prédiction normale (112), un modèle appris de prédiction d'urgence (200), et un premier modèle appris de jugement (220) ;
une unité de prédiction normale (330) qui prédit un nombre de personnes en temps normaux au premier emplacement au certain moment en utilisant les données réelles (311) et le modèle appris de prédiction normale (112) ;
une unité de prédiction d'urgence (340) qui prédit le nombre de personnes en temps d'urgence au premier emplacement au certain moment en utilisant les données réelles (311) et le modèle appris de prédiction d'urgence (200) ;
une unité de jugement (350) qui juge si les données réelles (311) sont des données en temps normaux ou des données en temps d'urgence en utilisant les données réelles (311) et le premier modèle appris de jugement (220) ;
une unité de calcul (360) qui calcule le nombre de personnes au premier emplacement au certain moment en utilisant un résultat de prédiction normale (331) indiquant le nombre de personnes en temps normaux, un résultat de prédiction d'urgence (341) indiquant le nombre de personnes en temps d'urgence, et un résultat de jugement (351) en tant que résultat du jugement ; et
une unité de sortie (370) qui délivre en sortie un résultat (500) du calcul,
dans lequel le modèle appris de prédiction normale (112) et le modèle appris de prédiction d'urgence (200) sont générés par le dispositif d'apprentissage (100) selon l'une quelconque des revendications 1 à 8 et le premier modèle appris de jugement (220) est généré par le dispositif d'apprentissage selon la revendication 6 ou 7.

10. Le dispositif de prédiction selon la revendication 9, dans lequel
l'unité d'acquisition (320) acquiert des informations de distribution de covariables (210) incluant une distribution de covariables en temps normaux et une distribution de covariables en temps d'urgence, et
l'unité de jugement (350) juge si les données réelles (311) sont des données en temps normaux ou des données en temps d'urgence en utilisant les données réelles (311), les informations de distribution de covariables (210) et le premier modèle appris de jugement (220).

11. Le dispositif de prédiction selon la revendication 9, dans lequel l'unité de jugement (350) juge une probabilité que les données réelles (311) soient des données en temps normaux et une probabilité que les données réelles (311) soient des données en temps d'urgence en utilisant les données réelles (311) et le premier modèle appris de jugement (220).

12. Le dispositif de prédiction selon la revendication 11, dans lequel
l'unité d'acquisition (320) acquiert des informations de distribution de covariables (210) incluant une distribution de covariables en temps normaux et une distribution de covariables en temps d'urgence, et
l'unité de jugement (350) juge la probabilité que les données réelles (311) soient des données en temps normaux et la probabilité que les données réelles (311) soient des données en temps d'urgence en utilisant les données réelles (311), les informations de distribution de covariables (210) et le premier modèle appris de jugement (220).

13. Le dispositif de prédiction selon l'une quelconque des revendications 9 à 12, dans lequel, dans un cas où le premier emplacement est une station, les données réelles (311) incluent des informations d'exploitation sur des trains circulant à travers la station.

14. Un dispositif de prédiction (300) comprenant :
une unité d'acquisition (320) qui acquiert des données réelles (311) en tant qu'informations indiquant au moins l'une parmi une météo à un premier emplacement à un certain moment et des informations de congestion en tant qu'informations concernant une congestion, un modèle appris de prédiction normale (112), un modèle appris de prédiction d'urgence (200), et un second modèle appris de jugement (230) qui délivre en sortie des informations indiquant si des informations d'entrée sont des données en temps normaux ou des données en temps d'urgence lorsque des informations indiquant au moins l'une parmi les informations de congestion et la météo à un emplacement autre que le premier emplacement au certain moment y sont entrées ;
une unité de prédiction normale (330) qui prédit un nombre de personnes en temps normaux au premier emplacement au certain moment en utilisant les données réelles (311) et le modèle appris de prédiction normale (112) ;
une unité de prédiction d'urgence (340) qui prédit le nombre de personnes en temps d'urgence au premier emplacement au certain moment en utilisant les données réelles (311) et le modèle appris de prédiction d'urgence (200) ;
une unité de jugement (350) qui juge si les données réelles (311) sont des données en temps normaux ou des données en temps d'urgence en utilisant les données réelles (311) et le second modèle appris de jugement (230) ;
une unité de calcul (360) qui calcule le nombre de personnes au premier emplacement au certain moment en utilisant un résultat de prédiction normale (331) indiquant le nombre de personnes en temps normaux, un résultat de prédiction d'urgence (341) indiquant le nombre de personnes en temps d'urgence, et un résultat de jugement (352) en tant que résultat du jugement ; et
une unité de sortie (370) qui délivre en sortie un résultat (500) du calcul,
dans lequel le modèle appris de prédiction normale (112) et le modèle appris de prédiction d'urgence (200) sont générés par le dispositif d'apprentissage (100) selon l'une quelconque des revendications 1 à 8 et le second modèle appris de jugement (230) est généré par le dispositif d'apprentissage selon la revendication 8.

15. Le dispositif de prédiction selon la revendication 14, dans lequel
l'unité d'acquisition (320) acquiert des informations de distribution de covariables (210) incluant une distribution de covariables en temps normaux et une distribution de covariables en temps d'urgence, et
l'unité de jugement (350) juge si les données réelles (311) sont des données en temps normaux ou des données en temps d'urgence en utilisant les données réelles (311), les informations de distribution de covariables (210) et le second modèle appris de jugement (230).

16. Le dispositif de prédiction selon la revendication 14, dans lequel
le second modèle appris de jugement (230) est un modèle appris qui délivre en sortie une probabilité que les informations d'entrée soient des données en temps normaux et une probabilité que les informations d'entrée soient des données en temps d'urgence lorsque les informations indiquant au moins l'une parmi les informations de congestion et la météo à un emplacement autre que le premier emplacement au certain moment y sont entrées, et
l'unité de jugement (350) juge une probabilité que les données réelles (311) soient des données en temps normaux et une probabilité que les données réelles (311) soient des données en temps d'urgence en utilisant les données réelles (311) et le second modèle appris de jugement (230).

17. Le dispositif de prédiction selon la revendication 14, dans lequel
l'unité d'acquisition (320) acquiert des informations de distribution de covariables (210) incluant une distribution de covariables en temps normaux et une distribution de covariables en temps d'urgence, et
l'unité de jugement (350) juge une probabilité que les données réelles (311) soient des données en temps normaux et une probabilité que les données réelles (311) soient des données en temps d'urgence en utilisant les données réelles (311), les informations de distribution de covariables (210) et le second modèle appris de jugement (230).

18. Un système de prédiction comprenant :
un serveur (400) qui stocke des données réelles (311) en tant qu'informations indiquant au moins l'une parmi une météo à un premier emplacement à un certain moment et des informations de congestion en tant qu'informations concernant une congestion, un modèle appris de prédiction normale (112), un modèle appris de prédiction d'urgence (200), et un premier modèle appris de jugement (220) ; et
un dispositif de prédiction (300),
dans lequel le dispositif de prédiction (300) inclut :
une unité d'acquisition (320) qui acquiert les données réelles (311), le modèle appris de prédiction normale (112), le modèle appris de prédiction d'urgence (200) et le premier modèle appris de jugement (220) à partir du serveur (400) ;
une unité de prédiction normale (330) qui prédit un nombre de personnes en temps normaux au premier emplacement au certain moment en utilisant les données réelles (311) et le modèle appris de prédiction normale (112) ;
une unité de prédiction d'urgence (340) qui prédit le nombre de personnes en temps d'urgence au premier emplacement au certain moment en utilisant les données réelles (311) et le modèle appris de prédiction d'urgence (200) ;
une unité de jugement (350) qui juge si les données réelles (311) sont des données en temps normaux ou des données en temps d'urgence en utilisant les données réelles (311) et le premier modèle appris de jugement (220) ;
une unité de calcul (360) qui calcule le nombre de personnes au premier emplacement au certain moment en utilisant un résultat de prédiction normale (331) indiquant le nombre de personnes en temps normaux, un résultat de prédiction d'urgence (341) indiquant le nombre de personnes en temps d'urgence, et un résultat de jugement (351) en tant que résultat du jugement ; et
une unité de sortie (370) qui délivre en sortie un résultat (500) du calcul,
dans lequel le modèle appris de prédiction normale (112) et le modèle appris de prédiction d'urgence (200) sont générés par le dispositif d'apprentissage (100) selon l'une quelconque des revendications 1 à 8, le premier modèle appris de jugement (220) est généré par le dispositif d'apprentissage selon la revendication 6 ou 7, et le dispositif de prédiction est le dispositif de prédiction selon l'une quelconque des revendications 9 à 13.

19. Un système de prédiction comprenant :
un serveur (400) qui stocke des données réelles (311) en tant qu'informations indiquant au moins l'une parmi une météo à un premier emplacement à un certain moment et des informations de congestion en tant qu'informations concernant une congestion, un modèle appris de prédiction normale (112), un modèle appris de prédiction d'urgence (200), et un second modèle appris de jugement (230) qui délivre en sortie des informations indiquant si des informations d'entrée sont des données en temps normaux ou des données en temps d'urgence lorsque des informations indiquant au moins l'une parmi les informations de congestion et la météo à un emplacement autre que le premier emplacement au certain moment y sont entrées ; et
un dispositif de prédiction (300),
dans lequel le dispositif de prédiction (300) inclut :
une unité d'acquisition (320) qui acquiert les données réelles (311), le modèle appris de prédiction normale (112), le modèle appris de prédiction d'urgence (200) et le second modèle appris de jugement (230) à partir du serveur (400) ;
une unité de prédiction normale (330) qui prédit un nombre de personnes en temps normaux au premier emplacement au certain moment en utilisant les données réelles (311) et le modèle appris de prédiction normale (112) ;
une unité de prédiction d'urgence (340) qui prédit le nombre de personnes en temps d'urgence au premier emplacement au certain moment en utilisant les données réelles (311) et le modèle appris de prédiction d'urgence (200) ;
une unité de jugement (350) qui juge si les données réelles (311) sont des données en temps normaux ou des données en temps d'urgence en utilisant les données réelles (311) et le second modèle appris de jugement (230) ;
une unité de calcul (360) qui calcule le nombre de personnes au premier emplacement au certain moment en utilisant un résultat de prédiction normale (331) indiquant le nombre de personnes en temps normaux, un résultat de prédiction d'urgence (341) indiquant le nombre de personnes en temps d'urgence, et un résultat de jugement (351) en tant que résultat du jugement ; et
une unité de sortie (370) qui délivre en sortie un résultat (500) du calcul,
dans lequel le modèle appris de prédiction normale (112) et le modèle appris de prédiction d'urgence (200) sont générés par le dispositif d'apprentissage (100) selon l'une quelconque des revendications 1 à 8, le second modèle appris de jugement (230) est généré par le dispositif d'apprentissage selon la revendication 8, et le dispositif de prédiction est le dispositif de prédiction selon l'une quelconque des revendications 14 à 17.

20. Un procédé d'apprentissage réalisé par le dispositif d'apprentissage (100) selon l'une quelconque des revendications 1 à 8, le procédé d'apprentissage comprenant :
l'acquisition de premières données d'apprentissage (111) en tant qu'informations indiquant au moins l'une parmi une météo à un premier emplacement à une pluralité de moments et des informations de congestion en tant qu'informations concernant une congestion, un modèle appris de prédiction normale (112) qui délivre en sortie un nombre de personnes en temps normaux au premier emplacement à un certain moment lorsque des premières informations indiquant au moins l'une parmi les informations de congestion et la météo au premier emplacement au certain moment y sont entrées, et des informations de valeur vraie (113) incluant des valeurs vraies indiquant les nombres de personnes en temps normaux au premier emplacement à une pluralité de moments et des valeurs vraies indiquant les nombres de personnes en temps d'urgence au premier emplacement à une pluralité de moments ;
la génération d'un modèle appris de prédiction d'urgence (200) qui délivre en sortie le nombre de personnes en temps d'urgence au premier emplacement au certain moment lorsque les premières informations y sont entrées en utilisant les premières données d'apprentissage (111), le modèle appris de prédiction normale (112) et les informations de valeur vraie (113) ; et
la délivrance en sortie du modèle appris de prédiction normale (112) et du modèle appris de prédiction d'urgence (200).

21. Un procédé de prédiction réalisé par le dispositif de prédiction (300) selon l'une quelconque des revendications 9 à 13, le procédé de prédiction comprenant :
l'acquisition de données réelles (311) en tant qu'informations indiquant au moins l'une parmi une météo à un premier emplacement à un certain moment et des informations de congestion en tant qu'informations concernant une congestion, un modèle appris de prédiction normale (112), un modèle appris de prédiction d'urgence (200), et un premier modèle appris de jugement (220) ;
la prédiction d'un nombre de personnes en temps normaux au premier emplacement au certain moment en utilisant les données réelles (311) et le modèle appris de prédiction normale (112), la prédiction du nombre de personnes en temps d'urgence au premier emplacement au certain moment en utilisant les données réelles (311) et le modèle appris de prédiction d'urgence (200), et le jugement de savoir si les données réelles (311) sont des données en temps normaux ou des données en temps d'urgence en utilisant les données réelles (311) et le premier modèle appris de jugement (220) ;
le calcul du nombre de personnes au premier emplacement au certain moment en utilisant un résultat de prédiction normale (331) indiquant le nombre de personnes en temps normaux, un résultat de prédiction d'urgence (341) indiquant le nombre de personnes en temps d'urgence, et un résultat de jugement (351) en tant que résultat du jugement ; et
la délivrance en sortie d'un résultat (500) du calcul.

22. Un procédé de prédiction réalisé par le dispositif de prédiction (300) selon l'une quelconque des revendications 14 à 17, le procédé de prédiction comprenant :
l'acquisition de données réelles (311) en tant qu'informations indiquant au moins l'une parmi une météo à un premier emplacement à un certain moment et des informations de congestion en tant qu'informations concernant une congestion, un modèle appris de prédiction normale (112), un modèle appris de prédiction d'urgence (200), et un second modèle appris de jugement (230) qui délivre en sortie des informations indiquant si des informations d'entrée sont des données en temps normaux ou des données en temps d'urgence lorsque des informations indiquant au moins l'une parmi les informations de congestion et la météo à un emplacement autre que le premier emplacement au certain moment y sont entrées ;
la prédiction d'un nombre de personnes en temps normaux au premier emplacement au certain moment en utilisant les données réelles (311) et le modèle appris de prédiction normale (112), la prédiction du nombre de personnes en temps d'urgence au premier emplacement au certain moment en utilisant les données réelles (311) et le modèle appris de prédiction d'urgence (200), et le jugement de savoir si les données réelles (311) sont des données en temps normaux ou des données en temps d'urgence en utilisant les données réelles (311) et le second modèle appris de jugement (230) ;
le calcul du nombre de personnes au premier emplacement au certain moment en utilisant un résultat de prédiction normale (331) indiquant le nombre de personnes en temps normaux, un résultat de prédiction d'urgence (341) indiquant le nombre de personnes en temps d'urgence, et un résultat de jugement (351) en tant que résultat du jugement ; et
la délivrance en sortie d'un résultat (500) du calcul.
